Europäisches Patentamt

European Patent Office

Office européen des brevets

(19)

(11) **EP 1 317 462 B1**

(12) **EUROPÄISCHE PATENTSCHRIFT**

(45) Veröffentlichungstag und Bekanntmachung des Hinweises auf die Patenterteilung:
**01.06.2005 Patentblatt 2005/22**

(21) Anmeldenummer: **01972062.2**

(22) Anmeldetag: **14.09.2001**

(51) Int Cl.⁷: **C07F 7/10**, C07F 7/12, C04B 35/589

(86) Internationale Anmeldenummer:
**PCT/EP2001/010667**

(87) Internationale Veröffentlichungsnummer:
**WO 2002/022624 (21.03.2002 Gazette 2002/12)**

(54) **SILICIUMBORKARBONITRIDKERAMIKEN UND VORLAEUFERVERBINDUNGEN, VERFAHREN ZU DEREN HERSTELLUNG UND VERWENDUNG**

SILICOBORONCARBONITRIDE CERAMICS AND PRECURSOR COMPOUNDS, METHOD FOR THE PRODUCTION AND USE THEREOF

CERAMIQUES A CARBONITRURE DE SILICIUM-BORE ET COMPOSES PRECURSEURS, LEURS PROCEDES DE PREPARATION ET LEUR UTILISATION

(84) Benannte Vertragsstaaten:
**DE FR GB SE**

(30) Priorität: **14.09.2000 DE 10045427**
**01.02.2001 DE 10104536**

(43) Veröffentlichungstag der Anmeldung:
**11.06.2003 Patentblatt 2003/24**

(73) Patentinhaber:
• **Max-Planck-Gesellschaft zur Förderung der Wissenschaften e.V.**
**80539 München (DE)**
• **Fraunhofer-Gesellschaft zur Förderung der angewandten Forschung e.V.**
**80686 München (DE)**

(72) Erfinder:
• **JANSEN, Martin**
**71229 Leonberg (DE)**
• **MÜLLER, Utz**
**78532 Tuttlingen (DE)**
• **CLADE, Jürgen**
**97084 Würzburg (DE)**
• **SPORN, Dieter**
**97074 Würzburg (DE)**

(74) Vertreter: **Dey, Michael, Dipl.-Chem. Dr. et al**
**Weickmann & Weickmann,**
**Postfach 860 820**
**81635 München (DE)**

(56) Entgegenhaltungen:
**EP-A- 0 502 399          WO-A-98/45302**

• **CHEMICAL ABSTRACTS, vol. 57, no. 33, 1962 Columbus, Ohio, US; abstract no. 15134h, XP002183336 & HEINRICH NÖTH: "Decomposition of the Si-N Bond by Lewis-acidic boron compounds" Z. NATURFORSCH., Bd. 16b, Nr. 9, 1961, Seiten 618-620,**

**Beschreibung**

Die vorliegende Erfindung betrifft neue Alkylhalogensilylaminoborane, insbesondere Alkylchlorsilylaminoborane, die durch die Variation der Anzahl der reaktiven Zentren die Viskositätseinstellung von Polyborosilazanverbindungen ermöglichen, neue Borosilazanverbindungen, neue Oligo- oder Polyborosilazanverbindungen, die das Strukturmerkmal $R^1$-Si-NH-B-$R^2$ aufweisen, wobei $R^1$ oder $R^2$ oder beide einen Kohlenwasserstoffrest mit 1 bis 20 C-Atomen, insbesondere Alkyl-, Phenyl- oder Vinylgruppen darstellen, Siliciumcarbonitridkeramikpulver, keramisches Material auf der Basis SiC, $Si_3N_4$ und BN, sowie Verfahren zur jeweiligen Herstellung und die Verwendung der Polyborosilazane und der keramischen Materialien, insbesondere zur Herstellung von Fasern.

Die Herstellung multinärer, nicht-oxidischer Keramiken über molekulare Einkomponentenvorläufer hat eine herausragende Bedeutung erlangt. Sie ermöglicht den Zugang zu nitridischen, carbidischen und carbonitridischen Stoffsystemen, die über herkömmliche Festkörperreaktionen nicht zugänglich sind. Die Produkte zeichnen sich durch hohe Reinheit, homogene Elementverteilung und gleichmäßige Partikelgröße aus.

Werkstoffe, die aus Silicium (Si), Bor (B) und Stickstoff (N) und gegebenenfalls auch aus Kohlenstoff (C) bestehen und gleichzeitig keinen oder nur einen geringen Anteil an Sauerstoff enthalten, zeigen besondere Eigenschaften hinsichtlich der thermischen Stabilität und der Oxidationsbeständigkeit. Sie können als Bulkmaterialien, in Verbundwerkstoffen, für Beschichtungen oder als keramische Fasern technischen Einsatz finden. Die borhaltigen Materialien zeigen im Allgemeinen eine erhöhte Kristallisationshemmung, während kohlenstoffhaltige Materialien darüber hinaus eine höhere Zersetzungstemperatur als kohlenstofffreie Keramiken aufweisen. Aufgrund der hohen mechanischen Belastbarkeit, der Korrosionsbeständigkeit bei hohen Temperaturen, der Thermoschockbeständigkeit und der Hochtemperaturfestigkeit solcher Werkstoffe können sie beispielsweise als Verstärkungsmaterialien für Hochtemperaturverbundstoffe eingesetzt werden und finden Verwendung in der Automobilindustrie und in der Luftfahrtindustrie, beispielsweise in Turboladern, Turbinen von Düsentriebwerken, sowie zur Auskleidung von Raketendüsen und Brennkammern.

Vielversprechend ist die Darstellung von Keramiken über anorganische Polymere. Durch Vernetzung molekularer Baueinheiten erhält man Polymere, die durch Pyrolyse zu Keramiken umgesetzt werden können. Dieser bereits von Chantrell und Popper, Special Ceramics (Hrsg.: E.P. Popper), Academic Press, New York (1964), 87-103 begangene Weg bietet insbesondere für carbidische und nitridische Keramiken der 3. und 4. Hauptgruppe neue Möglichkeiten.

Noeth beschreibt in Z. Naturforsch. 16B, Nr. 9, 618-20 (1961) B-N-Verbindungen, welche beim Abbau von Aminosilanen gebildet werden können.

Winter, Verbeek und Mansmann (Bayer AG) (1975), US 3892583, entwickelten die ersten spinnbaren anorganischen Polymere, die durch Aminolyse bzw. Ammonolyse von Methylchlorsilanen dargestellt wurden. Durch Pyrolyse konnten sie in Si/C/N-Fasern überführt werden. Die ersten Fasern mit kommerzieller Bedeutung gehen auf Yajima zurück, der Polycarbosilane in kohlenstoffreiche SiC-Fasern (Handelsname NICALON) S. Yajima, J. Hayashi, M. Omori (1978), US 4100233, überführte.

Die erste homogene Keramik im System Si/B/N/C der ungefähren Zusammensetzung $SiBN_3C$ wurde von Wagner, Jansen und Baldus, O. Wagner (1992), EP 502399, dargestellt. Die Fasern dieses Materials, das durch Aminolyse des Einkomponentenvorläufers Trichlorsilylaminodichlorboran (TADB) $Cl_3Si$-(NH)-$BCl_2$ dargestellt wird, weisen ein hervorragendes Eigenschaftsprofil auf, H.P. Baldus, M. Jansen, Dr. Sporn, Science (1999) 285, S. 699. Weiter verbesserte Hochtemperatureigenschaften zeigen Keramiken aus dem Vorläufer TSDE (Trichlorsilyldichlorborylethan, $Cl_3Si$-[CH-$CH_3$]-$BCl_2$) M. Jansen, H. Jüngermann (Bayer AG) (1997), WO98/45302 A1.

So scheint sich die Hochtemperaturstabilität der Keramiken mit steigendem Kohlenstoffgehalt zu verbessern. Dies zeigt z.B. der Gang der Zersetzungstemperaturen (unter Inertgasbedingungen) der Keramiken $Si_3B_3N_7$, $SiBN_3C$ (= $Si_3B_3N_7 \cdot C_{2.4}$) und $SiBN_{2.5}C_2$ (= $Si_3B_3N_7 \cdot C_6$) die sich im Wesentlichen nur durch den Kohlenstoffgehalt unterscheiden. Die Temperaturstabilität steigt von 1750 °C über 1900 °C bis auf > 2000 °C an.

Der Kohlenstoff- und/oder Stickstoffgehalt der Keramiken kann durch die Wahl der Vernetzungsreagenzien variiert werden, M. Jansen, H. Jüngermann (1997), US 5866705. So kann TADB neben Methylamin bzw. Ammoniak auch mit weiteren Aminen wie z.B. Guanidin zu Polymeren umgesetzt werden.

In den genannten Keramiken sind Silicium und Bor ausschließlich von Stickstoff koordiniert. Die Realisation neuer Strukturmerkmale wie Si-C-oder B-C-Bindungen in Keramiken führt zu verbesserter mechanischer und thermischer Belastbarkeit einer Keramik.

Die Einstellung der rheologischen Eigenschaften, z.B. der Viskosität eines Polymeres für einen entsprechenden Verarbeitungsprozess kann z.B. durch thermische Vorbehandlung geschehen. Die bekannten Polymere im System Si/B/N/C haben jedoch den Nachteil, dass die thermische Vernetzung im flüssigen d.h. geschmolzenen Zustand kontinuierlich zunimmt und die rheologischen Eigenschaften, wie etwa die Viskosität so während der Verarbeitung nicht konstant bleiben. Dies verursacht erhebliche Probleme wie z.B. die Verstopfung der Düsen beim Faserziehen. Für einen möglichst hohen Verzug beim Faserziehen sind linear vernetzte Moleküle von Vorteil. Die genannten Einkomponentenvorläufer haben zu viele reaktive Zentren, die zu einer mehrdimensionalen Vernetzung führen. Vorteilhaft wäre jedoch ein vorwiegend aus Ketten bestehendes Polymer.

Eine Aufgabe dieser Erfindung ist deshalb die Bereitstellung neuartiger, in hohen Ausbeuten darstellbarer, metallorganischer Vorläuferverbindungen sowie ein Verfahren zur Herstellung nitridischer Keramiken aus diesen Vorläuferverbindungen, die aus Si, N, B und C bestehen und die die genannten Nachteile überwinden. Die monomeren Vorläufer sollen durch die Einstellung der Anzahl der reaktiven Zentren d.h. der Halogenatome eine Möglichkeit zur Einstellung der rheologischen Eigenschaften, insbesondere Viskositätseinstellung bei der Umsetzung zu Polyborosilazanen bieten. Insbesondere die Konstanz der rheologischen Eigenschaften, wie etwa der Viskosität in flüssiger Form soll dadurch verbessert werden. Dieses Verfahren soll weiterhin die Darstellung von Keramiken mit hohen Kohlenstoffanteilen ermöglichen. In der Keramik soll Silicium teilweise von Kohlenstoff koordiniert sein.

Diese Aufgabe wird erfindungsgemäß gelöst durch amorphe Keramiken bzw. Nanokomposite, deren Vorläuferverbindungen, den jeweiligen Verfahren zu deren Herstellung und der Verwendung der Polyborosilazane und der keramischen Materialien, wie sie in den Patentansprüchen offenbart sind.

In einem ersten Aspekt betrifft die Erfindung eine Verbindung der allgemeinen Formel (I)

$$R_xHal_{3-x}Si\text{-}NH\text{-}BR_yHal_{2-y} \tag{I}$$

worin R jeweils unabhängig einen Kohlenwasserstoffrest mit 1 bis 20 C-Atomen, vorzugsweise 1 bis 10 C-Atomen, darstellt,

Hal jeweils unabhängig Cl, Br oder I bedeutet,

x = 1 oder x = 2 ist und

y = 0 oder y = 1 ist.

Bei den erfindungsgemäßen Verbindungen handelt es sich um Alkylhalogensilylaminoborane, welche mindestens einen an das Siliciumatom gebundenen Kohlenwasserstoffrest aufweisen. Solche Verbindungen weisen das Strukturmerkmal C-Si-N-B, C-Si-N-B-C oder/und Si-N-B-C auf und enthalten somit Kohlenstoff bereits im Grundgerüst. Mit solchen Verbindungen können Keramiken hergestellt werden, die aufgrund des erhöhten Kohlenstoffgehalts und der Realisation neuer Strukturmerkmale, wie Si-C- oder B-C-Bindungen eine verbesserte mechanische und thermische Belastbarkeit aufweisen. Die Substitution von Halogenresten in den erfindungsgemäßen Alkylhalogensilylaminoboranen durch Kohlenwasserstoffreste, und zwar sowohl am Si als auch am B, führt neben der vorteilhaften Einbringung von Kohlenstoff weiterhin zu einer gezielten Verringerung der Anzahl reaktiver Halogenatome. Dadurch können die rheologischen Eigenschaften, insbesondere die Viskosität der aus den erfindungsgemäßen Verbindungen gebildeten Oligomeren oder Polymeren variiert oder/und eingestellt werden. Besonders vorteilhaft sind Verbindungen, die drei Kohlenwasserstoffreste (x + y = 3) aufweisen, welche noch zwei zur Vernetzung fähige Halogenatome enthalten, wodurch eine mehrdimensionale Vernetzung begrenzt wird.

In der Formel I bedeutet der Rest R jeweils unabhängig einen Kohlenwasserstoffrest mit 1 bis 20 C-Atomen, vorzugsweise mit 1 bis 10 C-Atomen. Ein Kohlenwasserstoffrest ist ein Rest, der aus den Elementen Kohlenstoff und Wasserstoff gebildet ist. Erfindungsgemäß kann der Kohlenwasserstoffrest verzweigt oder unverzweigt, gesättigt oder ungesättigt sein. Der Kohlenwasserstoffrest kann auch aromatische Gruppen enthalten, die wiederum mit Kohlenwasserstoffresten substituiert sein können. Beispiele für bevorzugte Kohlenwasserstoffreste sind z.B. unverzweigte gesättigte Kohlenwasserstoffreste, wie etwa $C_1$ bis $C_{20}$-Alkyl, insbesondere Methyl, Ethyl, n-Propyl, n-Butyl, n-Pentyl, n-Hexyl, n-Heptyl, n-Octyl, n-Nonyl und n-Decyl. Bei den Resten R kann es sich aber auch um verzweigte gesättigte Kohlenwasserstoffe, insbesondere verzweigte $C_3$ bis $C_{20}$-Alkyle handeln, wie etwa i-Propyl, i-Butyl, t-Butyl, sowie weitere verzweigte Alkylreste. In einer weiteren bevorzugten Ausführungsform umfasst der Rest R eine oder mehrere olefinisch ungesättigte Gruppen. Beispiele für solche Reste sind Vinyl, Allyl, Butenyl, Pentenyl, Hexenyl, Heptenyl, Octenyl, Nonenyl, Decenyl, Butadienyl, Pentadienyl, Hexadienyl, Heptadienyl, Octadienyl, Nonadeinyl und Decadienyl. Der Rest R kann auch eine Alkingruppe, also eine C≡C-Bindung enthalten. In einer weiteren bevorzugten Ausführungsform enthält mindestens ein Rest R und bevorzugt alle Reste R eine aromatische Gruppe, insbesondere eine aromatische Gruppe mit 5 bis 10 C-Atomen, insbesondere 5 oder 6 C-Atomen, wie etwa eine Phenylgruppe oder eine mit einem Kohlenwasserstoff, insbesondere einem $C_1$-$C_{10}$-Kohlenwasserstoff, substituierte aromatische Gruppe, insbesondere Phenylgruppe, wie etwa Methylphenyl, Dimethylphenyl, Trimethylphenyl, Ethylphenyl, oder Propylphenyl. Einschließlich der Substituenten umfasst der aromatische Rest bevorzugt von 5 bis 20, insbesondere bis 10 C-Atome. Die Kohlenwasserstoffreste R können dabei jeweils unabhängig voneinander variiert werden.

Besonders bevorzugt umfasst mindestens ein Rest R und insbesondere alle Reste R eine $C_1$ bis $C_{20}$-Alkylgruppe, eine Phenylgruppe, eine Vinylgruppe oder einen Kohlenwasserstoffrest mit 1 bis 3 C-Atomen, insbesondere Methyl, Ethyl oder Propyl und am meisten bevorzugt Methyl.

Der Rest Hal steht für ein Halogenatome und bedeutet insbesondere Cl, Br oder I, wobei es bevorzugt ist, dass mindestens ein Rest Hal und bevorzugt alle Reste Hal Cl bedeuten. Bei solchen Verbindungen handelt es sich um Alkylchlorsilylaminochlorborane.

Besonders bevorzugte Ausführungsformen der Erfindung sind Verbindungen der Formel $RHal_2Si\text{-}NH\text{-}BHal_2$, wobei die Reste R und Hal die oben angegebenen Bedeutungen und insbesondere die oben als bevorzugt angegebenen Bedeutungen aufweisen. Diese Verbindungen enthalten das Strukturmerkmal C-Si-N-B und sie haben vier zur Oligomerisierung bzw. Polymerisierung reaktive Halogenatome. Ein besonders bevorzugtes Beispiel einer solchen Verbindung ist (Methyldichlorsilylamino)-dichlorboran (MADB). Weiterhin bevorzugt sind Verbindungen der Formel $R_2HalSi\text{-}NH\text{-}BHal_2$. Solche Verbindungen enthalten zwei Kohlenwasserstoffreste am Si-Atom, wodurch der Kohlenstoffgehalt einer aus solchen Verbindungen hergestellten Kermik weiter erhöht werden kann. Weiterhin haben solche Verbindungen nur noch drei zur Oligomerisierung bzw. Polymerisierung reaktive Halogenatome, wodurch rheologische Eigenschaften, wie etwa die Viskosität von daraus gebildeten Oligomeren bzw. Polymeren weiter variiert werden kann. Ein besonders bevorzugtes Beispiel für solche Verbindungen mit zwei Alkylresten und drei Halogenresten ist (Dimethylchlorsilylamino)-dichlorboran (DADB). Allgemein sind Verbindungen der Formel (I) mit dem Strukturelement $BHal_2$ sehr bevorzugt.

Weitere bevorzugte Verbindungen umfassen (Vinyldichlorsilylamino)-dichlorboran, (Divinylchlorsilylamino)-dichlorboran, (Phenyldichlorsilylamino)-dichlorboran, (Diphenylchlorsilylamino)-dichlorboran,(Ethyldichlorsilylamino)-dichlorboran,(Diethylchlorsilylamino)-dichlorboran und (Methylvinylchlorsilylamino)-dichlorboran.

Außerdem umfasst die Erfindung Verbindungen mit dem Strukturmerkmal -BRHal, in denen das Boratom an einen Kohlenwasserstoffrest und an ein Halogen gebunden ist. Solche Verbindungen weisen bevorzugt die Formel $RHal_2Si\text{-}NH\text{-}BRHal$ oder $R_2HalSi\text{-}NH\text{-}BRHal$ auf. Durch das Ersetzen eines Halogens am Bor durch einen Kohlenwasserstoffrest, können Vorläufer mit einem weiter erhöhten Kohlenstoffgehalt und einer weiter reduzierten Funktionalität im Hinblick auf eine Vernetzung gebildet werden. So weisen Verbindungen $RHal_2Si\text{-}NH\text{-}BRHal$ nur drei und Verbindungen $R_2HalSi\text{-}NH\text{-}BRHal$ sogar nur zwei zur Oligomerisierung bzw. Polymerisierung reaktive Halogenatome auf. Besonders bevorzugte Beispiele dieser Verbindungen sind(Methyldichlorsilylamino)-methylchlorboran,(Dimethylchlorsilylamino)-methylchlorboran, (Phenyldichlorsilylamino)-phenylchlorboran, (Diphenylchlorsilylamino)-phenylchlorboran, (Vinyldichlorsilylamino)-vinylchlorboran, (Divinylchlorsilylamino)-vinylchlorboran und (Methylvinylchlorsilylamino)-phenylchlorboran.

Die erfindungsgemäßen Verbindungen der allgemeinen Formel (I) können dadurch erhalten werden, dass man eine Verbindungen der Formel (II)

$$R_xHal_{3-x}Si\text{-}NH\text{-}SiR_3 \tag{II}$$

mit einer Verbindung der Formel (III)

$$BR_yHal_{3-y} \tag{III}$$

bei einer Temperatur zwischen -100 °C und +25 °C umsetzt.

Geeignete und bevorzugte Bedeutungen für R, Hal, x und y sind wie oben angegeben. Die Umsetzung kann in einem organischen Lösungsmittel, wie etwa n-Hexan oder Toluol durchgeführt werden, wobei beispielsweise die Verbindung der Formel (II) einer in einem organischen Lösungsmittel gelösten Verbindung der Formel (III) zugetropft wird. Bevorzugt wird allerdings ohne Lösemittel gearbeitet. Die Reaktionstemperaturen betragen bevorzugt mindestens -90 °C und ganz besonders bevorzugt mindestens -80 °C und bevorzugt höchstens 0 °C, besonders bevorzugt höchstens -50 °C. Besonders vorteilhafte Ergebnisse werden bei einer Reaktionsführung bei einer Temperatur von etwa -78 °C erhalten.

Die erfindungsgemäßen Verbindungen der Formel (I) können auch dadurch hergestellt werden, dass man eine Verbindung der Formel (II)

$$R_xHal_{3-x}Si\text{-}NH\text{-}SiR_3 \tag{II,}$$

worin R jeweils unabhängig einen Kohlenwasserstoffrest mit 1 bis 20 C-Atomen darstellt,
Hal jeweils unabhängig Cl, Br oder I bedeutet und
x 1 oder 2 ist,
mit einer Verbindung der Formel (III)

$$BR_yHal_{3-y} \qquad\qquad\qquad\qquad (III),$$

worin R und Hal die oben angegebenen Bedeutungen haben und

y 0 oder 1 ist,

in einem Molverhältnis von 1:1 bis 1:10 umsetzt. Bevorzugt werden die Verbindung der Formel (II) und die Verbindung der Formel (III) in einem Molverhältnis zwischen 1:1 und 1:5 umgesetzt. Besonders vorteilhafte Ergebnisse werden bei einem Verfahren erhalten, bei dem sowohl die hierin angegebenen Temperaturgrenzen als auch das Molverhältnis eingehalten werden.

Die bei der Herstellung der erfindungsgemäßen Verbindung der Formel (I) eingesetzte Edukt-Verbindung der Formel (II) $R_xHal_{3-x}Si$-NH-SiR$_3$, kann dadurch hergestellt werden, dass man $R_xSiHal_{4-x}$ und $R_3Si$-NH-SiR$_3$ umsetzt. In einer bevorzugten Ausführungsform wird dabei eine Verbindung der Formel (IIa) $R_2HalSi$-NH-SiR$_3$ als Edukt-Verbindung hergestellt, indem man $R_2SiHal_2$ und $R_3Si$-NH-SiR$_3$ in einem Molverhältnis von 1:1 bis 1,5:1, bevorzugt von 1,1:1 bis 1,4:1 und besonders bevorzugt von 1,2:1 bis 1,3:1 umsetzt. Besonders gute Ergebnisse werden erhalten, wenn man die beiden Verbindungen $R_2SiHal_2$ und $R_3Si$-NH-SiR$_3$ in einem Molverhältnis von etwa 5:4 einsetzt.

Die Edukt-Verbindung der Formel (IIa) $R_2HalSi$-NH-SiR$_3$ und insbesondere das Silan mit R = CH$_3$ kann auch dadurch hergestellt werden, dass man $R_2SiHal_2$ und $R_3Si$-NH-SiR$_3$ bei einer Reaktionstemperatur von 40 bis 80 °C, insbesondere bis 60 °C umsetzt. Besonders hohe Ausbeuten an der Edukt-Verbindung von > 70 %, bevorzugt > 80 % können erhalten werden, wenn man die Reaktion unter Berücksichtigung sowohl der angegebenen Reaktionstemperatur als auch des angegebenen Molverhältnisses durchführt.

Die Herstellung der Edukt-Verbindungen sowie der Verbindungen der allgemeinen Formel (I) wird im Folgenden anhand der Herstellung der beiden besonders bevorzugten Verbindungen MADB und DADB nochmals ausführlich erläutert.

Erstaunlicherweise gelang durch die Umsetzung von (1,1-Dichlortetramethyl)disilazan oder (Chlorpentamethyl)disilazan mit Bortrichlorid die Darstellung der beiden neuen Verbindungen (Methyldichlorsilylamino)dichlorboran (MADB) und (Dimethylchlorsilylamino)dichlorboran (DADB). Diese Verbindungen enthalten beide das Strukturmerkmal C-Si-N-B. MADB hat vier zur Oligo- bzw. Polymerisierung reaktive Halogenatome, DADB nur drei. Somit können durch die Wahl eines der Moleküle oder durch die Mischung beider Moleküle in einem beliebigen Verhältnis die rheologischen Eigenschaften, insbesondere die Viskosität der darzustellenden Oligo- bzw. Polymere variiert werden. Beide Moleküle sind Gegenstand dieser Erfindung.

Die Herstellung des Eduktes (1,1-Dichlortetramethyl)disilazan gelingt mit einer Ausbeute von über 80 % aus Hexamethyldisilazan und Methyltrichlorsilan durch Rühren bei Raumtemperatur. Die Herstellung des Eduktes (Chlorpentamethyl)disilazan gelingt durch die Umsetzung von Hexamethyldisilazan und Dimethyldichlorsilan.

Erfindungsgemäß gelingt die Darstellung von (Chlorpentamethyl)disilazan in einer Ausbeute von über 70 %, wenn das Verhältnis der Reaktanden $Me_2SiCl_2$ und Hexamethyldisilazan bei 5:4 liegt und die Reaktionstemperatur 40 bis 60 °C beträgt.

Erfindungsgemäß entstehen die Verbindungen MADB und DADB in Ausbeuten von 80 % und 70 % der Theorie durch Zutropfen der Edukte zu Bortrichlorid, das in einem organischen Lösungsmittel gelöst sein kann (z.B. n-Hexan, Toluol). Die Molverhältnisse von Bortrichlorid zu den Edukten liegen zwischen 5:1 und 1:1. Die Reaktionstemperaturen können zwischen -100 °C und Raumtemperatur variieren, der bevorzugte Wert liegt bei -78 °C.

Aus den erfindungsgemäßen Verbindungen der allgemeinen Formel (I) lassen sich durch Reaktion mit primären oder sekundären Aminen monomere, oligomere oder polymere Borosilazanverbindungen herstellen. In solchen Borsilazanverbindungen sind die Halogenatome der Verbindung der Formel (I) ganz oder teilweise durch Aminogruppen substituiert. Die Erfindung betrifft deshalb weiterhin Borosilazanverbindungen der allgemeinen Formel (IV):

$$(R'R''N)_qR_xHal_{3-x-q}Si\text{-}NH\text{-}BR_yHal_{2-y-z}(NR'R'')_z, \qquad\qquad (IV)$$

worin R' und R'' jeweils unabhängig Wasserstoff oder einen Kohlenwasserstoffrest mit 1 bis 20 C-Atomen darstellen,

R jeweils unabhängig einen Kohlenwasserstoffrest mit 1 bis 20 C-Atomen darstellt,

Hal jeweils unabhängig Cl, Br oder I bedeutet,

q = 0,1 oder 2 ist,

x = 1 oder 2 ist,

y = 0 oder 1 ist und

z = 0,1 oder 2 ist,

mit der Maßgabe, dass q + z ≥ 1, x + q ≤ 3 und y + z ≤ 2 ist.

Die erfindungsgemäßen Borosilazanverbindungen der Formel (IV) enthalten wenigstens einen Kohlenwasserstoffrest, der an das Si-Atom gebunden ist, sodass sie das Strukturmerkmal C-Si-N-B aufweisen. Verbindungen, bei denen die Halogenatome teilweise durch die Aminogruppen R'R"N substituiert sind, enthalten somit als Substituenten am Si bzw. B Kohlenwasserstoffreste, Halogen und Aminreste. Bevorzugt sind jedoch Borosilazanverbindungen der Formel (IV) in denen die Halogenatome vollständig durch Aminogruppen substituiert sind. Solche Verbindungen weisen die Formel (IVa) $(R'R''N)_q R_x Si-NH-BR_y(NR'R'')_z$ auf, worin $q + x = 3$ und $y + z = 2$.

Falls noch ein oder mehrere Halogenatome der Borosilazanverbindung vorliegen, ist es bevorzugt, dass Hal bei mindestens einem Auftreten und bevorzugt bei jeden Auftreten Cl darstellt.

Weiterhin bevorzugt sind Borosilazanverbindungen mit der Formel

$(R'R''N) R Hal Si-NH-B Hal_2$,

$(R'R''N) R_2 Si-NH-B Hal_2$,

$(R'R''N)_2 R Si-NH-B Hal_2$,

$R_2 Hal Si-NH-B Hal (NR'R'')$,

$R_2 Hal Si-NH-B R (NR'R'')$,

$R_2 Hal Si-NH-B (NR'R'')_2$,

$(R'R''N) R_2 Si-NH-B Hal (NR'R'')$,

$(R'R''N) R Hal Si-NH-B Hal (NR'R'')$,

$(R'R''N) R Hal Si-NH-B R (NR'R'')$,

$(R'R''N) R Hal Si-NH-B (NR'R'')_2$,

$(R'R''N)_2 R Si-NH-B Hal (NR'R'')$,

$(R'R''N) R Hal Si-NH-B R Hal$,

$(R'R''N) R_2 Si-NH-B R Hal$ oder

$(R'R''N)_2 R Si-NH-B R Hal$.

Besonders bevorzugt sind auch Borosilazanverbindungen, in denen alle Halogenatome durch Aminogruppen ersetzt worden sind, die also nur noch Kohlenwasserstoffreste oder Aminogruppenreste aufweisen. Solche Verbindungen haben die Formeln

$(R'R''N) R_2 Si-NH-B (NR'R'')_2$,

$(R'R''N) R_2 Si-NH-B R (NR'R'')$,

$(R'R''N)_2 R Si-NH-B R (NR'R'')$ oder

$(R'R''N)_2 R Si-NH-B (NR'R'')_2$.

In den oben genannten Formeln hat der Rest R bei jedem Auftreten die oben bei der Verbindung (I) angegebenen und insbesondere die dort als bevorzugt angegebenen Bedeutungen. Besonders bevorzugt handelt es sich bei R um einen Kohlenwasserstoffrest mit 1 bis 3 C-Atomen, insbesondere um einen Methyl-, Ethyl- oder Propylrest oder um einen Phenylrest oder einen Vinylrest.

Die Reste R' und R" stellen jeweils unabhängig Wasserstoff oder einen Kohlenwasserstoffrest mit 1 bis 20 C-Atomen, vorzugsweise mit 1 bis 10 C-Atomen, dar. Bevorzugt sind Verbindungen, in denen wenigstens einer der Rest R' und R" einen Kohlenwasserstoffrest mit 1 bis 20 C-Atomen darstellt. Besonders bevorzugt wird R' und R" ausgewählt aus $C_1$ bis $C_{20}$-Alkylgruppen, insbesondere $C_1$ bis $C_3$-Alkylgruppen, wie etwa Methyl, Ethyl, Propyl, aus $C_1$-$C_3$-Alkenylgruppen, sowie aus Phenyl- oder Vinylgruppen.

Besonders bevorzugt sind Verbindungen, in denen sowohl R als auch R' und R" bei jedem Auftreten Methyl darstellen. Die erfindungsgemäßen Borsilazanverbindungen können dadurch hergestellt werden, dass man eine Verbindung der Formel (I) mit mindestens je nach Molekül der vier- bis achtfachen (Anzahl der Halogenatome mal zwei), vorzugsweise mindestens der zehnfachen molaren Menge einer Verbindung der Formel (V) R'R"NH bei einer Temperatur von -80 °C bis +300 °C umsetzt. Auf diese Weise lassen sich aus den Verbindungen der Formel (I), wobei diese einzeln oder in beliebigen Mischungsverhältnissen eingesetzt werden können, durch Reaktion mit primären oder/und sekundären Aminen, monomere oder oligomere oder polymere Verbindungen der bevorzugten Formeln

$(NR'R'')_2 R Si-NH-B (NR'R'')_2$

$(NR'R'') R_2 Si-NH-B( NR'R'')_2$ oder

$[-(NR'R'') R Si-NH-B (NR'R'')-]_a$, wobei a den Polymerisationsgrad angibt,

herstellen. Auch andere monomere Borosilazane und Polyborosilazane sind möglich, insbesondere solche, die quervernetzte Strukturen aufweisen. Unter Verwendung der oben beispielhaft beschriebenen Verbindungen MADB und TADB können insbesondere Verbindungen der Formel $(NRR')_2(CH_3)Si-NH-B(NRR')_2$ oder $(NRR')(CH_3)_2Si-NH-B(NRR')_2$ oder $[(NRR')(CH_3)Si-NH-B(NRR')]_a$ erhalten werden. Die monomeren oder oligomeren Einheiten zeichnen sind dadurch aus, dass die erste Koordinationssphäre jedes Siliciumatoms aus Kohlenstoff und Stickstoffatomen besteht. Die erfindungsgemäßen Borosilazanverbindungen der Formel (IV) werden bevorzugt dadurch hergestellt, dass man eine Verbindung der Formel (I) mit mindestens je nach Molekül der vier- bis achtfachen (Anzahl der Halogenatome mal zwei), vorzugsweise mindestens der zehnfachen molaren Menge, mehr bevorzugt mindestens der zwanzigfachen molaren Menge einer Verbindung der Formel (V)

$$R'R''NH \qquad\qquad (V)$$

bei einer Temperatur von -80 °C bis +300 °C umsetzt.

Die monomeren oder oligomeren Einheiten können durch Temperaturbehandlung und/oder durch Vernetzung mit Ammoniak oder einem Amin zu Polymeren umgesetzt werden.

Die Temperaturbehandlung kann bevorzugt bei Temperaturen von -80 °C bis + 500 °C, mehr bevorzugt bis +300 °C und am meisten bevorzugt bis +200 °C erfolgen. Die Behandlung erfolgt bevorzugt unter Atmosphärendruck oder unter vermindertem Druck. Sie kann in einigen Fällen aber auch vorteilhaft unter erhöhtem Druck erfolgen.

Die Erfindung betrifft deshalb weiterhin eine Oligo- oder Polyborosilazanverbindung, welche durch Umsetzen einer Verbindung der Formel (I) oder/und einer Verbindung der Formel (IV) mit einer Verbindung der Formel (V) oder durch Polymerisation einer Verbindung der Formel (I) oder der Formel (IV) erhältlich ist. Solche Oligo- oder Polyborosilazanverbindungen weisen das Strukturmerkmal C-Si-N-B, C-Si-N-B-C oder/und Si-N-B-C auf. Bevorzugt besteht die erste Koordinationssphäre der Siliciumatome der erfindungsgemäßen Oligo- oder Polyborosilazenverbindungen sowohl aus Kohlenstoff als auch aus Stickstoff, wobei die Siliciumatome und/oder die Boratome einen Rest R und die Stickstoffatome einen Rest R' oder R'' tragen.

Die erfindungsgemäßen Oligo- oder Polyborosilazanverbindungen sind somit erhältlich durch Umsetzen einer Verbindung der Formel (I) oder/und einer Verbindung der Formel (IV), welche wie oben definiert sind, mit einer Verbindung der Formel (V) R'R''NH, wobei R' und R'' die oben angegebenen Bedeutungen aufweisen, oder durch Polymerisation einer Verbindung der Formel (I) oder der Formel (IV), wobei die Oligo- oder Polyborosilazanverbindungen das Strukturmerkmal C-Si-N-B, Si-N-B-C oder/und C-Si-N-B-C aufweisen.

Ein weiterer Gegenstand der vorliegenden Erfindung ist ein Verfahren zur Herstellung einer Oligo- oder Polyborosilazanverbindung, wobei man eine oder mehrere Verbindungen der Formel (I) oder/und eine oder mehrere Verbindungen der Formel (IV), welche wie oben definiert sind, polymerisiert oder mit einer oder mehreren Verbindungen der Formel (V) R'R''NH umsetzt, wobei R' und R'' die oben angegebenen Bedeutungen aufweisen. Bevorzugt wird die Polymerisation als Polykondensation bei einer Temperatur von ≤ 200 °C durchgeführt. Die Polymerisation wird weiterhin bevorzugt bei einem verminderten Druck von ≤ 90 kPa durchgeführt.

Die vorliegende Erfindung betrifft weiterhin eine Polyborosilazanverbindung, erhältlich durch ein Verfahren wie oben beschrieben, wobei die Polyborosilazanverbindung bei einer Temperatur zwischen 50 und 300 °C, bevorzugt 100 bis 150 °C, aufschmilzt und die Schmelze innerhalb dieses Temperaturintervalls eine Viskosität von 140 bis 200 Pa·s, bevorzugt 90 bis 120 Pa·s und einen Verlustfaktor von 10 bis 500, bevorzugt 50 bis 100 erreicht.

Die Oligo- oder Polyborosilazanverbindungen weisen insbesondere die Strukturmerkmale C-Si-N-B-N-B-N-Si-C, C-Si-N-B-N-Si-N-Boder/und Si-N-B-N-Si-N-B-C auf. Die angegebenen Strukturmerkmale sind - zur besseren Übersichtlichkeit - lineare Sequenzen, wobei Si selbstverständlich immer an vier Nachbaratome, B und N immer an drei Nachbaratome und C jeweils an drei oder vier Nachbaratome gebunden ist. Die entsprechenden Bindestriche wurden zur besseren Übersichtlichkeit weggelassen, können jedoch vom Fachmann ohne weiteres mitgelesen werden. Verzweigungen können an jedem Atom auftreten.

Bevorzugt sind B und Si nur von N oder/und C umgeben. Besonders bevorzugt ist an jedes B oder/und Si oder mindestens mehr als 50 %, insbesondere mehr als 80 % aller B oder/und Si mindestens ein C gebunden. N und C könne beliebig umgeben sein, wobei N-N-Bindungen bevorzugt nicht vorliegen.

Die rheologischen Eigenschaften, insbesondere die Viskosität der erfindungsgemäßen Oligo- oder Polyborosilazanverbindungen lässt sich durch die Wahl der Reste R in der eingesetzten Verbindung der Formel (I), durch die Wahl der Rest R' und R'' der eingesetzten Amine oder/und durch die Art der Temperaturbehandlung variieren.

Erfindungsgemäß ist eine Variation der rheologischen Eigenschaften, insbesondere der Viskosität bei gleichbleibender Temperaturbehandlung und Verwendung der gleichen Amine z.B. durch die Wahl des Monomers MADB oder DADB oder einer Mischung dieser Moleküle möglich. Auch die Methylgruppe(n) dieser Einkomponentenvorläufer können z.B. durch Alkyl-, Phenyl oder Vinylgruppen ganz oder teilweise ersetzt werden, um so einen höheren Kohlenstoffgehalt der Polymere zu liefern.

Die Umsetzung der Monomeren mit den genannten Aminen kann sowohl in offenen als auch in geschlossenen Systemen erfolgen. Die Reaktionstemperaturen liegen zwischen -78 °C und +500 °C, die Reaktionsdauer zwischen 5 Minuten und 20 Tagen. Der Druck beträgt bevorzugt zwischen 0,001 kPa und 5 x $10^5$ Pa, mehr bevorzugt zwischen 0,001 kPa und Atmosphärendruck.

Zur Umsetzung geeignete Amine umfassen beispielsweise Methylamin, Ethylamin, Dimethylamin, Anilin oder Ammoniak. Die Reaktion kann sowohl in den reinen Komponenten als auch in einem aprotischen Lösungsmittel, wie etwa Hexan, Toluol, THF oder Methylenchlorid durchgeführt werden. Die Reaktionstemperatur beträgt bevorzugt mindestens -78 °C, mehr bevorzugt mindestens -50 °C und am meisten bevorzugt mindestens -30 °C und bis zu bevorzugt höchstens 100 °C, mehr bevorzugt bis zu höchstens 5 °C.

Die Konsistenz der erfindungsgemäßen Polyborosilazane reicht in Abhängigkeit von den Resten R, R' und R" sowie vom Polymerisationsgrad von leicht viskos über harz- bzw. wachsartig bis hin zum festen amorphen oder kristallinen Zustand. Die thermische Vernetzung erfolgt durch Abspaltung eines Aminrestes unter Knüpfung von neuen Si-N oder B-N Bindungen. Die Vernetzung mittels Ammoniak erfolgt durch Substitution einer NR'R"-Gruppe durch eine $NH_2$-Gruppe, die dann weiter vernetzt.

Der Vernetzungsgrad der Polyborosilizane lässt sich somit durch die Art der Polymerisation, beispielsweise Polykondensation durch Temperaturbehandlung oder Vernetzung mit Ammoniak oder einem Amin gezielt einstellen. Es wurde gefunden, dass sich insbesondere die Verarbeitungseigenschaften der erfindungsgemäßen Polyborosilazane zu Fasern weiter verbessern lassen, indem man geeignete Reaktionsparameter der Polykondensation einstellt. Besonders bevorzugt umfasst das erfindungsgemäße Verfahren zur Herstellung einer Oligo- oder Polyborosilazanverbindung daher mindestens einen Verfahrensabschnitt, bei dem eine Polykondensation bei Temperaturen von ≤ 200 °C oder/und bei einem verminderten Druck, bevorzugt zwischen 0,01 kPa und 10 kPa durchgeführt wird. Unter diesen Reaktionsbedingungen entstehen weitgehend "linearisierte" Oligomere bzw. Prepolymere mit für den Schmelzspinnprozess besonders günstigen rheologischen Eigenschaften. Die Härtbarkeit der Grünfasern mit Reaktivgasen wird nicht beeinträchtigt. Zudem wird die Homogenität des Polymers in Bezug auf die Elementverteilung bei diesen bevorzugten Reaktionsbedingungen weiter verbessert.

Polyborosilazane, die zu Fasern weiterverarbeitet werden sollen, können aus chlorierten Vorstufen, wie etwa TADB gewonnen werden, indem man die Vorstufen in einem inerten Lösungsmittel, wie etwa Hexan, mit einem Amin, wie etwa Methylamin, umsetzt. Neben unlöslichem Methylammoniumchlorid, welches abfiltriert werden kann, entsteht dabei ein lösliches Borosilazan-Oligomerengemisch. Nach Abdestillieren des Lösungsmittels wird das noch flüssige Material dann thermisch unter Austritt von Methylamin soweit polykondensiert, bis ein bei Raumtemperatur festes, für den Schmelzspinnprozess geeignetes Produkt erhalten wird. Für das aus TADB hergestellte Borosilazan-Oligomerengemisch werden zur thermischen Polykondensation günstigerweise Temperaturen von ca. 250 °C eingesetzt. Im Falle von aus MADB oder DADB hergestellten Borosilazan-oligomeren Gemischen sind aufgrund der geringeren Anzahl von Vernetzungsstellen pro Monomereinheit oftmals höhere Temperaturen von bis zu 500 °C vorteilhaft.

Allerdings sind Verbindungen mit der Struktureinheit ≡ Si-N(R)-B = thermisch empfindlich und können sich leicht unter Bildung von Monosilan- und Borazinderivaten zersetzen. Eine derartige Zersetzungsreaktion unter Austritt von Mono- und Oligosilazanen kann auch während der Polykondensation von Borosilazan-Oligomergemischen bei erhöhten Temperaturen stattfinden. Oftmals bewirkt diese Zersetzungsreaktion das Auftreten von Inhomogenitäten in der Elementverteilung. Der Vorteil eines Einkomponentenvorläufers, nämlich insbesondere eine homogene Elementverteilung im keramischen Endprodukt, kann durch Auftrennung in ein Zweikomponentensystem verlorengehen, wodurch die Hochtemperatureigenschaften des Materials verschlechtert werden können. Aus diesem Grund haben sich Verfahrenstemperaturen für die Polykondensation eines oligomeren Gemisches von ≤ 200 °C, bevorzugt ≤ 180 °C, mehr bevorzugt ≤ 150 °C und mindestens 50 °C, mehr bevorzugt ≥ 100 °C als vorteilhaft erwiesen. Für den Fall, dass diese Temperatur bei den gewählten Ausgangsstoffen nicht ausreicht, um ein bei Raumtemperatur festes Produkt zu erhalten, welches insbesondere bei einer späteren Verwendung im Schmelzspinnprozess erforderlich ist, wird die Reaktion vorteilhafterweise unter Vakuum durchgeführt. Der Druck beträgt dabei bevorzugt ≤ 90 kPa, mehr bevorzugt ≤ 10 kPa, mehr bevorzugt ≤ 1 kPa und noch mehr bevorzugt ≤ 0,1 kPa.

Bei dieser bevorzugten Verfahrensführung erhält man ein Polyborosilazan mit einer sehr homogenen Elementverteilung. Darüber hinaus weist es eine gute Verarbeitbarkeit zu Grünfasern auf und kann chemisch gehärtet und keramisiert werden. Ein weiterer Vorteil der Verfahrensführung unter Vakuum besteht darin, dass gegebenenfalls gebildete Mono- oder Oligosilazane im Vakuum abdestilliert werden können und somit das Produkt nicht verunreinigen.

Aus den erfindungsgemäßen Polyborosilazanen können die gewünschten Siliciumborcarbonitridkeramiken hergestellt werden. Ein weiterer Gegenstand der Erfindung ist deshalb ein Verfahren zur Herstellung einer Siliciumcarbobornitridkeramik, welches dadurch gekennzeichnet ist, dass man eine monomere, oligomere oder polymere Borosilazanverbindung, wie hierin beschrieben, in einer inerten oder einer aminhaltigen, und, falls kohlenstofffreie Keramiken gewünscht werden, einer ammoniakhaltigen Atmosphäre bei Temperaturen zwischen 800 °C und 2000 °C, beispielsweise zwischen 800 °C und 1700 °C, bevorzugt zwischen 1000 °C und 1800 °C; und am meisten bevorzugt bei 1350 °C bis 1750 °C tempert. Durch Aminolyse- bzw. Ammonolysereaktion und anschließende Pyrolyse werden die Borsilazane in ein Siliciumcarbobornitridkeramikpulver überführt. Bevorzugt liegen in der Keramik C-Si-N-B-Struktureinheiten vor und die Elemente Si, N, B und C sind zu mehr als 93 Massen-%, mehr bevorzugt zu mehr als 97 Massen-%, enthalten. Die erfindungsgemäße Siliciumcarbobornitridkeramik zeichnet sich insbesondere durch ihren geringen Sauerstoffgehalt von bevorzugt < 7 Massen-%, mehr bevorzugt < 1 Massen-% und am meisten < 0,5 Massen-% aus. Mit dem erfindungsgemäßen Verfahren zur Herstellung einer Siliciumcarboborornitridkeramik ist es möglich, Keramiken herzustellen, die praktisch frei von Sauerstoff sind. Für die Umsetzung der Borsilazanverbindungen mit Ammoniak kann man alle literaturbekannten Aminolyse- bzw. Ammonolyseverfahren von Tetrachlorsilan nutzen, beispielsweise die Umsetzung mit festem bzw. flüssigem Ammoniak bei tiefen Temperaturen (US-A-4196178), die Reaktion mit gasförmigem Ammoniak in einem organischen Lösungsmittel (US-A-3959446) oder die Umsetzung mit Ammoniak in einer Hochtemperaturreaktion unter Abspaltung von Chlorwasserstoff (US-A-4145224).

Die inerte Atmosphäre kann ausgewählt werden aus einer Edelgasatmosphäre, beispielsweise einer Argon- oder Heliumatmosphäre, einer Stickstoffatmosphäre oder einer Atmosphäre aus einem anderen Inertgas, welches unter den Reaktionsbedingungen zwischen 800 °C und 2000 °C nicht mit den Reaktionspartnern reagiert.

Die keramischen Ausbeuten bei der Pyrolyse betragen im Allgemeinen zwischen 65 % und 80 %. Das Pyrolyseprodukt ist ein keramisches Material, welches zu mehr als 93 Massen-%, bevorzugt zu mehr als 97 Massen-%, aus den Elementen Si, N, B und C besteht und die Struktureinheiten C-Si-N-B, Si-N-B-C oder/und Si-N-B enthält. Bevorzugt enthält das keramische Material die Struktureinheiten C-Si-N-B-C, und insbesondere die Struktureinheiten C-Si-N-B-N-B-N-Si-C, C-Si-N-B-N-Si-N-B oder/und Si-N-B-N-Si-N-B-C.

Bevorzugt liegen in der Siliciumcarbobornitridkeramik C-Si-N-B-Struktureinheiten vor und die Elemente Si, N, B und C sind zu mehr als 93 Massen-%, insbesondere zu mehr als 97 Massen-% enthalten, mit der Maßgabe, dass C ≥ 3 Massen-%.

Die angegebenen Strukturmerkmale sind lineare Sequenzen, wobei Si selbstverständlich immer an vier Nachbaratome, B und N immer an drei Nachbaratome und C jeweils an drei oder vier Nachbaratome gebunden ist. Die entsprechenden Bindestrichen wurden zur besseren Übersichtlichkeit weggelassen, können jedoch vom Fachmann ohne weiteres mitgelesen werden. Verzweigungen können an jedem Atom auftreten.

Bevorzugt sind B und Si nur von N oder/und C umgeben. Besonders bevorzugt ist an jedes B oder/und Si oder zumindest an mehr als 50 %, insbesondere mehr als 80 % aller B oder/und Si mindestens ein C gebunden. N und C können beliebig umgeben sein, wobei N-N-Bindungen bevorzugt nicht vorliegen.

Die erfindungsgemäße Siliciumborcarbonitridkeramik kann bei der Pyrolyse amorph oder zumindest teilweise kristallin anfallen. Bevorzugt handelt es sich um ein amorphes Siliciumborcarbonitrid, insbesondere um ein amorphes Siliciumcarbonornitridkeramikpulver. Die erfindungsgemäße Siliciumborcarbonitridkeramik zeichnet sich insbesondere durch eine hohe Temperaturbeständigkeit und eine Inertheit gegenüber Sauerstoff aus. Innerhalb der Keramik sind die enthaltenen Elemente nahezu vollständig homogen verteilt. Die Kristallisation des amorphen Materials zu einer Kompositkeramik aus SiC, $Si_3N_4$ und BN kann durch Auslagern bei einer Temperatur > 1700 °C erfolgen. In einer solchen kristallinen Kompositkeramik sind SiC, $Si_3N_4$ und BN Kristallite, vorzugsweise im Nanometermaßstab, im Wesentlichen völlig homogen verteilt, liegen also in molekulardisperser Verteilung vor. Die erfindungsgemäßen Keramiken zeichnen sich insbesondere durch ihr hohe Temperaturbeständigkeit aus.

Neben den amorphen Keramiken, kristallinen Keramiken und Verfahren zu deren Herstellung betrifft die vorliegende Erfindung auch die Verwendung der monomeren, oligomeren bzw. polymeren Borosilazanverbindungen sowie der amorphen und zumindest teilweise kristallinen keramischen Materialien zur Herstellung von keramischen Fasern, keramischen Beschichtungen, keramischen Formkörpern, keramischen Folien oder/und keramischen Mikrostrukturen.

Die Polyborosilazane können direkt oder gelöst in organischen Solventien zu Formkörpern, Fasern, Folien oder Beschichtungen verarbeitet werden. Die rheologischen Eigenschaften und insbesondere die Viskosität der Polymere können erfindungsgemäß durch die Wahl der eingesetzten Verbindungen der Formel (I), wie z.B. dem Verhältnis zwischen MADB oder DADB, sowie durch geeignete Wahl der Parameter für die Vernetzung den Erfordernissen angepasst werden.

Die geformten Polyborosilazane können einer Pyrolyse und/oder einer physikalischen oder chemischen Vorbehandlung, z.B. einer Härtung oder Vernetzung, unterzogen werden, um das Polymer unschmelzbar zu machen.

Eine geeignete Behandlung zur Herstellung unschmelzbarer Polyborosilazane ist beispielsweise in DE 195 30 390 A1 beschrieben, wobei dort unschmelzbare Verbindungen durch Umsetzung mit Boran-Amin-Adukten erhalten werden. Als weitere Reagenzien zur Unschmelzbarmachung von Polyborsilazan-Formkörpern, bevorzugt von Polyborsilazan-Grünfasern, können insbesondere Reaktivgase wie Ammoniak, dampfförmiges Ethylendiamin, Tri- oder Dichlorsilan sowie Borane (z.B. $B_2H_6$) verwendet werden. Wasserstoffverbindungen, wie $HSiCl_3$, $H_2SiCl_2$ oder $B_2H_6$ sind besonders geeignet, um Polymere mit ungesättigten Seitengruppen, wie Vinyl oder Allyl, durch Hydroborierungs- bzw. Hydrosilylierungsreaktionen unschmelzbar zu machen.

Die Mikrostrukturen können beispielsweise durch Spritzguss oder lithographische Verfahren erzeugt werden. Besonders bevorzugt werden die Keramiken in Form von Fasern hergestellt, aus denen beispielsweise Gewebe bzw. Geflechte angefertigt werden, die als Füllstoffe zur Erhöhung der Festigkeit oder Zähigkeit für andere Keramiken eingesetzt werden können.

Ein Gegenstand der vorliegenden Erfindung sind somit keramische Fasern, dadurch gekennzeichnet, dass man eine erfindungsgemäße Polyborosilazanverbindung im Ein- oder Multifilamentbetrieb unter inerter Atmosphäre schmelzspinnt, die ersponnenen Grünfasern in situ im Spinnschacht oder/und in einem nachfolgendem Verfahrensabschnitt durch Behandeln mit Reaktivgas, ausgewählt aus $NH_3$, Ethylendiamin, Trichlorsilan, Dichlorsilan, Boran-Dimethylsulfat-Adukt, Boran-Triethylamin-Adukt, $B_2H_6$ oder mit elektromagnetischer Strahlung oder Teilchenstrahlung unschmelbar macht und die gehärteten Grünfasern bei Temperaturen zwischen 800 und 1600 °C, bevorzugt bei 1200 °C keramisiert. Bevorzugt beträgt die Temperatur der Spinnmasse hierbei 50 bis 300 °C, bevorzugt 100 bis 150 °C, der Kapillardurchmesser der Spinndüsen beträgt 50 bis 500 μm, bevorzugt 300 μm, bei einer Kapillarlänge von 1 bis 30 mm, bevorzugt 5 bis 10 mm, und die Abzugsgeschwindigkeit beträgt 150 bis 1000 m/min, bevorzugt 300 bis 600 m/min. Die keramischen Fasern besitzen bevorzugt eine Zugfestigkeit von 0,5 bis 2 GPa, bevorzugt 1,5 GPa, einen Elastizitätsmodul von 50 bis 200 GPa, bevorzugt 150 GPa sowie einen Sauerstoffgehalt von ≤ 3 Gew.-%, bevorzugt ≤ 1 Gew.-%.

Weiterhin können die erfindungsgemäßen Borsilazanverbindungen auch in einer chemischen Gasphasenabscheidung (CVD) oder einer physikalischen Gasphasenabscheidung (PVD) eingesetzt werden. Durch die Beschichtung von Substraten mittels CVD oder PVD können keramische Beschichtungen hergestellt werden. Die Gasphasenabscheidung kann dabei wie im Stand der Technik beschrieben, durchgeführt werden (siehe z.B. DE 196 35 848 C1).

Nachfolgend wird die Erfindung anhand einiger Beispiele erläutert, ohne dass darin eine Einschränkung zu sehen ist:

Beispiel 1

Die Synthese von (1,1-Dichlortetramethyl)disilazan

$$Me_3Si(NH)SiMe_3 + MeSiCl_3 \rightarrow MeCl_2Si(NH)SiMe_3 + Me_3SiCl$$

In einem 250 ml Dreihalskolben mit Überdruckventil und Magnetrührer werden 178.8 g (1.20 mol, 141.2 ml) $MeSiCl_3$ mit 64.4 g Hexamethyldisilazan (0.40 mol, 50.0 ml) zwei Tage bei Raumtemperatur gerührt.

Das überschüssige Methylchlorsilan und das gebildete Trimethylchlorsilan werden bei Raumtemperatur langsam bei kontinuierlich sinkendem Druck abdestilliert. Die Reinigung erfolgt durch fraktionierende Destillation über eine Vigreuxkolonne.

Der Siedepunkt ist 39 °C bei p = 13 mbar, die Ausbeute 85 % der Theorie.

Massenspektroskopie an (1,1-Dichlortetramethyl)disilazan:

m/z = 201 ($M^+$), 186 ($M^+$ - $CH_3$), 171 ($M^+$ - 2 $CH_3$), 151 ($M^+$ - Cl - $CH_3$). NMR-Spektroskopie an (1,1-Dichlortetramethyl)disilazan:

$^1$H NMR ($C_6D_6$): δ = 0.03 ppm(s, 9 H); 0.47 ppm (s, 3 H).

Beispiel 2

Die Synthese von (Chlorpentamethyl)disilazan

$$Me_3Si(NH)SiMe_3 + Me_2SiCl_2 \rightarrow Me_2ClSi(NH)SiMe_3 + Me_3SiCl$$

In einem 250 ml Dreihalskolben mit Überdruckventil und Magnetrührer werden 51.6 g $Me_2SiCl_2$ (0.50 mol, 50.0 ml) mit 64.4 g (0.40 mol, 66.8 ml) Hexamethyldisilazan zwei Tage bei 50 °C gerührt. Das überschüssige Methylchlorsilan und das gebildete Trimethylchlorsilan werden bei Raumtemperatur langsam bei kontinuierlich sinkendem Druck (Membranpumpe) abdestilliert. Die Reinigung erfolgt durch Destillation über eine Vigreuxkolonne. Der Siedepunkt ist 34 °C bei p = 10 mbar, die Ausbeute: 70 % der Theorie.

MS (EI): m/z = 181 ($M^+$), 166 ($M^+$ - $CH_3$), 151 ($M^+$ - 2 $CH_3$), 146 ($M^+$ - Cl).

$^1$H NMR ($C_6D_6$): δ = 0.07 (s, 9 H); 0.29 (s, 6 H).

Beispiel 3

Synthese von 1,1-Dichlor-1-vinyl-trimethyldisilazan

In einem 250 ml Dreihalskolben werden 50 ml Hexamethyldisilazan (38,7 g, 0,24 mol) mit 70 ml Vinyltrichlorsilan (88,9 g, 0,55 mol) versetzt und über Nacht bei Raumtemperatur gerührt. Das Gemisch wird im Vakuum fraktioniert. Nach Abdestillieren von Trimethylchlorsilan und überschüssigem Vinyltrichlorsilan geht (1,1-Dichlsor-1-vinyltrimethyldisilazan) als klare, farblose Flüssigkeit über. Der Siedepunkt beträgt 40 °C bei 11 mbar, die Ausbeute beträgt 80 %.

$^1$H-NMR-Spektrum: δ = 0,18 ppm; Si(C$\underline{H}_3$); δ = 1,40 ppm (breit): N$\underline{H}$; δ = 6,17 ppm (Multiplett): Vinyl.

$^{13}$C-NMR-Spektrum: δ = 1,8 ppm: Si(C$\underline{H}_3$)$_3$; δ = 134,0 ppm: $\underline{C}$H=CH$_2$; δ = 137,3 ppm: CH=$\underline{C}$H$_2$.

Die Zuordnung der Vinyl-Kohlenstoffsignale erfolgte auf der Basis eines DEPT-Spektrums.

IR-Spektrum [cm$^{-1}$]: 3380 vs, 3198 w, 3145 w, 3070 m, 3022 w, 2960 vs, 2900 m, 1598 s, 1402 vs, 1251 vs, 1180 vs, 1000 vs, 960 vs, 850 vs, 770 vs, 725 vs, 690 vs, 605 sh, 575 vs.

MS: m/z = 198 (2 Cl): $M^+$-$CH_3$; m/z = 170 (2 Cl): $M^+$-$CH_3$-$C_2H_4$; m/z = 162: $M^+$-$CH_3$-HCl. Der Molekülpeak ist nicht sichtbar, da offensichtlich sehr rasche Abspaltung einer Methylgruppe stattfindet. Die Zahl der Cl-Atome in den Fragmentionen wurde anhand des Isotopenmusters bestimmt.

Beispiel 4

Synthese von (Methyldichlorsilylamino)dichlorboran (MADB):

$$MeCl_2Si(NH)SiMe_3 + BCl_3 \rightarrow MeCl_2Si(NH)BCl_2 + Me_3SiCl$$

In einem 250 ml Dreihalskolben mit Tropftrichter, Überdruckventil und Magnetrührer werden bei -78 °C 23.4 g (0.20 mol, 16.36 ml) $BCl_3$ vorgelegt. 21.2 g (0.10 mol) Methylchlordisilazan werden innerhalb 1 h unter Rühren zugetropft. Unter weiterem Rühren lässt man über Nacht aufwärmen.

Überschüssiges $BCl_3$ und das gebildete Trimethylchlorsilan werden bei Raumtemperatur langsam bei kontinuierlich sinkendem Druck (Membranpumpe) abdestilliert. Das Produkt ist ein farbloses Öl. Gereinigt wird das Rohprodukt durch Destillation. Der Siedepunkt ist 38 °C bei p = 13 mbar, die Ausbeute ca: 80 % der Theorie.
MS (EI): m/z = 194 ($M^+$ - $CH_3$), 173 ($M^+$ - HCl), 158 ($M^+$ - HCl - $CH_3$), 137 ($M^+$ - 2 HCl).
$^1$H-NMR ($C_6D_6$):0.47 (Monomer), 0.49 (Dimer).

Beispiel 5

Synthese von (Dimethylchlorsilylamino)dichlorboran (DADB)

$$Me_2ClSi(NH)SiMe_3 + BCl_3 \rightarrow Me_2ClSi(NH)BCl_2 + Me_3SiCl$$

In einem 250 ml Dreihalskolben mit Tropftrichter, Überdruckventil und Magnetrührer werden bei -78 °C 29.8 ml (0.36 mol) $BCl_3$ vorgelegt. 32.9 g (0.18mol) Methylchlordisilazan werden innerhalb 1 h unter Rühren zugetropft. Unter weiterem Rühren lässt man über Nacht aufwärmen.
Überschüssiges $BCl_3$ und das gebildete Trimethylchlorsilan werden bei Raumtemperatur langsam bei kontinuierlich sinkendem Druck (Membranpumpe) abdestilliert. Das Produkt ist ein farbloses Öl. Gereinigt wird das Rohprodukt durch Destillation. Der Siedepunkt ist 28 °C bei p = 0.1 mbar, die Ausbeute ca. 70 % der Theorie.
MS (EI): m/z = 174 ($M^+$ - $CH_3$), 154 ($M^+$ - Cl), 139 ($M^+$ - Cl - $CH_3$). $^1$H-NMR ($C_6D_6$):0.16 (Monomer), 0.32 (Dimer).

Beispiel 6

Synthese von (Vinyldichlorsilylamino)dichlorboran

In einem 500 ml Dreihalskolben werden 80 ml $BCl_3$ (114,4 g, 0,98 mol) bei -78 °C vorgelegt. Unter starkem Rühren werden während 1,5 h insgesamt 80 ml (81,6 g, 0,38 mol) Vinyldichlorsilylaminotrimethylsilan zugetropft. Der Ansatz wird über Nacht auf Raumtemperatur erwärmen gelassen und anschließend im Vakuum über eine 20 cm Vigreux-Kolonne fraktioniert. Nach Abtrennung von Trimethylchlorsilan und überschüssigem $BCl_3$ wird als Hauptfraktion VADB erhalten. Der Siedepunkt beträgt 33 °C bei 12 mbar, die Ausbeute beträgt 65 %.

Die reine Verbindung polymerisiert bei Raumtemperatur innerhalb weniger Stunden zu einer weißen, unschmelbaren Masse. Sie wird daher mit einem inerten Lösemittel (z.B. Pentan) verdünnt und gekühlt (-20 °C) gelagert.
$^1$H-NMR-Spektrum: $\delta$ = 4,9 ppm (breit): N$\underline{H}$; $\delta$ = 6,3 ppm (Multiplett): Vinyl.

$^{13}$C-NMR-Spektrum: $\delta$ = 130,7 ppm: $\underline{C}H = CH_2$; $\delta$ = 139,8 ppm: CH = $\underline{C}H_2$. Die Zuordnung der Vinyl-Kohlenstoffsignale erfolgte auf der Basis eines DEPT-Spektrums.

IR-Spektrum [cm$^{-1}$]: 3450 w, 3360 sst, 3075 w, 3040 vw, 2995 vw, 2970 w, 1600 s, 1447 s, 1370 vs, br, 1225 s, 1118 w, 1010 s, 998 s, 990 s, 949 vs, 920 vs, 849 s, 724 vs, 622 vs, 600 vs, 551 vs.

Beispiel 7

Synthese von (Dimethylchlorsilylamino)phenylchlorboran

In einem 250 ml Dreihalskolben wird eine Lösung von 20 g Phenylbordichlorid (24,5 g, 154 mmol) in 100 ml abs. Pentan auf -78 °C gekühlt. Anschließend werden 20 ml Chlorpentanmethyldisilazan (18,4 g, 102 mmol) zugetropft. Der Ansatz wird langsam auf Raumtemperatur gebracht und 12 h bei Raumtemperatur gerührt. Anschließend wird das Lösemittel, das als Nebenprodukt entstandene Trimethylchlorsilan sowie überschüssiges Phenylbordichlorid im Vakuum abgezogen. Es verbleibt (Dimethylchlorsilylamino)phenylchlorboran als klare, gelbliche Flüssigkeit. Ausbeute: 78 %. Die Substanz ist auch unter Vakuum nicht unzersetzt destilllierbar; Temperaturerhöhung auf $\geq 50$ °C führt zum Zerfall in Dimethyldichlorsilan und B-Triphenylborazin. Gegenüber Luft ist die Verbindung deutlich stabiler als die bisher bekannten aliphatisch oder olefinisch substituierten Borosilazane.

$^1$H-NMR-Spektrum: $\delta = 0,69$ ppm: C$\underline{H}_3$; $\delta = 4,77$ ppm (breit); N$\underline{H}$; $\delta = 7,3$-$7,8$ ppm (AA'BB'C-Spinsystem): Phenyl.

$^{13}$C-NMR-Spektrum: $\delta = 4,7$ ppm: $\underline{C}H_3$; $\delta = 128,5$, $132,3$, $133,9$ und $135,0$ ppm: Phenyl.

IR-Spektrum [cm$^{-1}$]: 3370 s, 3078 m, 3052 m, 3018 m, 2965 m, 2905 w, 1600 s, 1500 s, 1440 vs, 1405 sh, 1380 vs, 1295 s, 1260 vs, 1230 s, 1180 s, 1150 sh, 1100 vw, 1074 m, 1043 m, 1005 w, 945 sh, 900 vs, 851 vs, 826 vs, 801 vs, 753 s, 700 vs,, 680 sh, 635 s, 550 nm.

Beispiel 8

Ammonolyse von MADB

In einem 500 ml Dreihalskolben mit Tropftrichter, Überdruckventil und Magnetrührer werden bei -78 °C 80 ml über Natrium getrocknetes Ammoniak vorgelegt. 15.6 g MADB in 100 ml Pentan gelöst werden innerhalb 2 h unter Rühren zugetropft. An der Eintropfstelle bildet sich ein weißer Niederschlag, der sich in dem großen Ammoniaküberschuss schnell wieder auflöst. Über Nacht lässt man das Reaktionsgemisch unter Rühren auf Raumtemperatur erwärmen. Dabei fallen farblose Hydrochloride aus. Das gebildete Polymer ist in organischen Lösemitteln unlöslich. Das als Nebenprodukt angefallene Ammoniumchlorid wird mit flüssigem Ammoniak extrahiert. Nach der Extraktion bleibt das Polymer als farbloses Pulver zurück.

IR (KBr): 3435: $v$(N-H), 2964: $v_{as}$ (C-H), 2903: $v_s$ (C-H), 1406: $v$ (B-N), 1265: $\delta_s$ (CH$_3$), 994: $v$ (Si-N), 779: $v$ (Si-C).

Beispiel 9

Ammonolyse von DADB

In einem 500 ml Dreihalskolben mit Tropftrichter, Überdruckventil und Magnetrührer wird bei -78 °C 80 ml über Natrium getrocknetes Ammoniak vorgelegt. 12.6 g DADB in 100 ml Pentan gelöst werden innerhalb 2 h unter Rühren zugetropft. An der Eintropfstelle bildet sich ein weißer Niederschlag, der sich in dem großen Ammoniaküberschuss schnell wieder auflöst. Über Nacht lässt man das Reaktionsgemisch unter Rühren auf Raumtemperatur erwärmen. Dabei fallen farblose Hydrochloride aus. Das in Pentan löslichen Polymer wird vom ausgefallenen Ammoniumchlorid durch Filtration abgetrennt. Der Niederschlag wird dreimal mit je 20 ml Pentan ausgewaschen. Vom Filtrat wird das Pentan bei Raumtemperatur im Vakuum (10 mbar) abdestilliert. Es bleibt eine hochviskose farblose Flüssigkeit zurück.

IR (KBr): 3451: $v$(N-H), 2960: $v_{as}$ (C-H), 2900: $v_s$ (C-H), 1382: $v$ (B-N), 1254: $\delta_s$ (CH$_3$), 939: $v$ (Si-N), 783: (Si-C).

Beispiel 10

Aminolyse von MADB

In einem 500 ml Dreihalskolben mit Tropftrichter, Überdruckventil und Magnetrührer werden bei -78 °C 130 ml über Molsieb (4 Å) getrocknetes Methylamin vorgelegt. 16.9 g MADB in 120 ml Pentan gelöst werden innerhalb 2 h unter Rühren zugetropft. An der Eintropfstelle bildet sich ein weißer Niederschlag, der sich in dem großen Methylaminüberschuss schnell wieder auflöst. Über Nacht lässt man das Reaktionsgemisch unter Rühren auf Raumtemperatur erwärmen. Dabei fallen farblose Hydrochloride aus. Das in Pentan löslichen Polymer wird vom ausgefallenen Methylammoniumchlorid durch Filtration abgetrennt. Der Niederschlag wird dreimal mit je 20 ml Pentan ausgewaschen. Vom Filtrat wird das Pentan bei Raumtemperatur im Vakuum (10 mbar) abdestilliert. Es bleibt eine hochviskose farblose Flüssigkeit zurück.

IR (KBr): 3475: $v$(N-H), 2955: $v_{as}$ (C-H), 2890: $v_s$ (C-H), 1381: $v$ (B-N), 929: $v$ (Si-N), 755: $v$ (Si-C).

Beispiel 11

Aminolyse von DADB

In einem 500 ml Dreihalskolben mit Tropftrichter, Überdruckventil und Magnetrührer werden bei -78 °C 130 ml über Molsieb (4 Å) getrocknetes Methylamin vorgelegt. 16.1 g MADB in 120 ml Pentan gelöst werden innerhalb 2 h unter Rühren zugetropft. An der Eintropfstelle bildet sich ein weißer Niederschlag, der sich in dem großen Methylaminüberschuss schnell wieder auflöst. Über Nacht lässt man das Reaktionsgemisch unter Rühren auf Raumtemperatur erwärmen. Dabei fallen farblose Hydrochloride aus. Das in Pentan löslichen Polymer wird vom ausgefallenen Methylammoniumchlorid durch Filtration abgetrennt. Der Niederschlag wird dreimal mit je 20 ml Pentan ausgewaschen. Vom Filtrat wird das Pentan bei Raumtemperatur im Vakuum (10 mbar) abdestilliert. Es bleibt eine hochviskose farblose Flüssigkeit zurück.
IR (KBr): 3455: $\nu$(N-H), 2961: $\nu_{as}$ (C-H), 2918: $\nu_s$ (C-H), 1383: $\nu$ (B-N), 1261: $\delta_s$ (CH$_3$), 825: $\nu$ (Si-N), 778: $\nu$ (Si-C).

Beispiel 12

Pyrolyse eines Polymers aus den Beispielen 5 bis 8 in ein amorphes Keramikpulver

Das Polymer wird in ein Bornitridschiffchen gefüllt. Zunächst wird es im Argonstrom mit 150 K/h bis 700 °C aufgeheizt, 2 h bei 700 °C gehalten und mit 150 K/h auf Raumtemperatur abgekühlt. Danach werden sie im Stickstoffstrom mit 300 K/h bis 1500 °C aufgeheizt, 2 h bei 1400 °C gehalten und mit 150 K/h auf Raumtemperatur abgekühlt.
Die resultierende Keramik bestehet aus grob- bis feinporigen schwarzen Bruchstücken. Die Röntgenpulverdiffraktogramme der vier neuen Netzwerke weisen nach, dass alle Proben nach der Pyrolyse röntgenamorph sind.
Elementaranalyse aus Beispiel 7 (Massenprozent): Si: 26.3, B: 8.9, N: 36.3, C: 18.7, O: 3.9.

Beispiel 13

Darstellung eines Borosilazan-Oligomerengemischs

500 ml abs. Pentan werden auf -78 °C gekühlt und anschließend 200 ml Methylamin in das gekühlte Lösungsmittel einkondensiert. Unter starkem Rühren werden nun 50 ml MADB bzw. DADB verdünnt mit 100 ml abs. Pentan, innerhalb von einer Stunde zugetropft. Nach Entfernen des Kältebades beobachtet man zwei Phasen; die obere enthält das Oligomerengemisch, gelöst in Pentan, die untere enthält Methylammoniumchlorid, gelöst in flüssigem Methylamin. Der Ansatz wird über Nacht auf Raumtemperatur erwärmt, wobei das überschüssige Methylamin verdampft. Das nun kristallisierte Methylammoniumchlorid wird unter Schutzgas abfiltriert und mit 3 x 50 ml abs. Pentan ausgewaschen. Aus den vereinigten Filtraten wird das Lösungsmittel im Vakuum abgezogen. Man erhält ein bei Raumtemperatur dickflüssiges Oligomerengemisch.

Beispiel 14

Darstellung eines Polyborosilazans

Ein nach Beispiel 10 durch Aminolyse von MADB oder DADB erhaltenes Oligomerengemisch wird unter Schutzgasatmosphäre mit 50°/h auf 200 °C erhitzt. Nach einer Haltezeit von 3 h lässt man das Material auf Raumtemperatur abkühlen und schließt den Reaktionskolben an eine Destillierapparatur an. Unter Vakuum wird nun mit 50°/h auf 150 °C erhitzt und diese Temperatur so lange beibehalten, bis keine Nebenprodukte mehr übergehen. Darauf wird die Temperatur im Laufe von 1 h auf 200 °C erhöht. Nach einer Haltezeit von 3 h lässt man wiederum auf Raumtemperatur abkühlen und erhält ein festes, sprödes, farbloses, klares Produkt.

Beispiel 15

Rheologische Charakterisierung eines aus MADB hergestellten Polyborosilazans

Auf einem Rotationsrheometer wird zunächst die Viskosität in einem Temperaturbereich von 120 bis 145 °C ermittelt. Aus einer Arrhenius-Auftragung ergibt sich bei 131 °C eine Viskosität von 100 Pa·s. Bei dieser Temperatur werden Oszillationsversuche durchgeführt. Man ermittelt zunächst durch Variation der Deformationsamplitude y von 0,01 bis 10 den Bereich der linearen Viskoelastizität (dieser reicht bis y = 1) und dann durch Variation der Oszillationsfrequenz von 6 bis 600 Hz bei y = 0,1 den Verlauf des Speichermoduls G' und des Verlustmoduls G''. G' steigt während des Versuchs von 9,6 Pa auf 2480 Pa; G" steigt von 724 Pa auf 60600 Pa. Daraus ergibt sich bei ω = 10 Hz ein Verlustfaktor (tan δ) von 61,2. Nach R. Beyreuther und R. Vogel, Intern. Polymer Processing XI, Hanser Publishers, München 1996, ist ein Verlustfaktor von mindestens 10 erforderlich für ein gut spinnbares Polymer.

Beispiel 16

Rheologische Charakterisierung eines aus DADB hergestellten Polyborosilazans

Auf einem Rotationsrheometer wird zunächst die Viskosität in einem Temperaturbereich von 70 bis 100 °C ermittelt. Aus einer Arrhenius-Auftragung ergibt sich bei 88,6 °C eine Viskosität von 100 Pa·s. Bei dieser Temperatur werden Oszillationsversuche durchgeführt. Man ermittelt zunächst durch Variation der Deformationsamplitude $y$ von 0,01 bis 10 den Bereich der linearen Viskoelastizität (dieser reicht bis $y = 0,7$) und dann durch Variation der Oszillationsfrequenz von 0,1 bis 100 Hz bei $y = 0,1$ den Verlauf des Speichermoduls G' und des Verlustmoduls G". G' steigt während des Versuchs von 55 Pa auf 54000 Pa; G" steigt von 0,3 Pa auf 150 Pa. Daraus ergibt sich bei ω = 1 Hz ein Verlustfaktor (tan δ) von 200.

Beispiel 17

Herstellung von SiBNC-Grünfasern aus einem nach den vorangegangenen Beispielen hergestellten und charakterisierten Polyborosilazan

Das Polyborosilazan wird in einen beheizbaren Druckbehälter eingefüllt, bei 90 °C aufgeschmolzen und durch Beaufschlagung mit Reinstickstoff (p = 4 bis 8 bar) durch eine Kapillardüse (∅ 300 μm) gepresst. Der austretende Polymerfaden wird auf eine Galette aufgewickelt (Abzugsgeschwindigkeit 300 m/min) und abgelegt.

Beispiel 18

Härtung von nach Beispiel 13 hergestellten Grünfasern im Batchverfahren mit Ammoniak oder Aminen

Die Grünfasern werden in einen Batchreaktor gebracht, in dem eine Atmosphäre aus reinem $NH_3$ oder aus Ethylendiamin-haltigem $N_2$ (EDA-Gehalt zwischen 0,5 und 1,5 %) eingestellt wird. Nach 24 h Auslagerung bei Raumtemperatur wird die Temperatur des Reaktors auf 60 °C erhöht und die Auslagerung für weitere 24 h fortgesetzt. Die gehärteten Grünfasern können anschließend bei 1200 °C pyrolysiert werden, ohne dass Defekte (Aufschmelzungen, Verklebungen) auftreten. Die keramischen Fasern besitzen typischerweise eine Zugfestigkeit von 1 bis 1,5 GPa, einen Elastizitätsmodul von 100 bis 150 GPa und einen Sauerstoffgehalt von ≤ 1 Gew.-%.

Beispiel 19

In situ-Schachthärtung von Grünfasern während des Spinnprozesses

Das Polyborosilazan wird wie in Beispiel 13 erläutert zu Grünfasern versponnen. Während des Prozesses wird jedoch ein Gemisch aus $N_2$ mit ca. 1-2 % Trichlorsilan in den Spinnschacht eingeleitet. Es ist durch Absaugvorrichtung darauf zu achten, dass kein Trichlorsilan an die Spinndüse gelangt. Die ersponnenen und gehärteten Grünfasern können anschließend bei 1200 °C pyrolysiert werden. Die keramischen Fasern besitzen typischerweise eine Zugfestigkeit von 1 bis 1,5 GPa, einen Elastizitätsmodul von 100 bis 150 GPa und einen Sauerstoffgehalt von ≤ 1 Gew.-%.

**Patentansprüche**

**1.** Verbindung der allgemeinen Formel (I)

$$R_xHal_{3-x}Si-NH-BR_yHal_{2-y},$$

worin R jeweils unabhängig einen Kohlenwasserstoffrest mit 1 bis 20 C-Atomen darstellt,
Hal jeweils unabhängig Cl, Br oder I bedeutet,
x = 1 oder 2 ist und

y = 0 oder 1 ist.

2. Verbindung nach Anspruch 1,
   **dadurch gekennzeichnet,**
   **dass** Hal bei jedem Auftreten Cl bedeutet.

3. Verbindung nach Anspruch 1 oder 2,
   **dadurch gekennzeichnet,**
   **dass** R bei jedem Auftreten unabhängig einen Kohlenwasserstoffrest mit 1 bis 3 C-Atomen, eine $C_1$ - $C_{20}$-Alkylgruppe, eine Phenylgruppe oder eine Vinylgruppe darstellt.

4. Verfahren zur Herstellung einer Verbindung nach einem der Ansprüche 1 bis 3,
   **dadurch gekennzeichnet,**
   **dass** man eine Verbindung der Formel (II)

$$R_xHal_{3-x}Si\text{-}NH\text{-}SiR_3,$$

   worin R jeweils unabhängig einen Kohlenwasserstoffrest mit 1 bis 20 C-Atomen darstellt,
   Hal jeweils unabhängig Cl, Br oder I bedeutet und
   x = 1 oder 2 ist,
   mit einer Verbindung der Formel (III)

$$BR_yHal_{3-y},$$

   worin R und Hal die oben angegebenen Bedeutungen haben und
   y = 0 oder 1 ist,
   bei einer Temperatur zwischen -100 °C und +25 °C oder/und in einem Molverhältnis von 1:1 bis 1:10 umsetzt.

5. Verfahren nach Anspruch 4,
   **dadurch gekennzeichnet,**
   **dass** Hal bei jedem Auftreten Cl bedeutet.

6. Verfahren nach Anspruch 4 oder 5,
   **dadurch gekennzeichnet,**
   **dass** R bei jedem Auftreten unabhängig einen Kohlenwasserstoffrest mit 1 bis 3 C-Atomen, eine $C_1$ - $C_{20}$-Alkylgruppe, eine Phenylgruppe oder eine Vinylgruppe darstellt.

7. Verfahren zur Herstellung einer Verbindung der Formel (II)

$$R_xHal_{3-x}Si\text{-}NH\text{-}SiR_3,$$

   worin R jeweils unabhängig einen Kohlenwasserstoffrest mit 1 bis 20 C-Atomen darstellt und
   Hal Cl, Br oder I bedeutet
   und x = 1 oder 2 ist,
   **dadurch gekennzeichnet,**
   **dass** man $R_xSiHal_{4-x}$ und $R_3Si\text{-}NH\text{-}SiR_3$ umsetzt.

8. Verfahren nach Anspruch 7,
   **dadurch gekennzeichnet,**
   **dass** x = 2 ist.

9. Verfahren nach Anspruch 8,
   **dadurch gekennzeichnet,**
   **dass** man $R_2SiHal_2$ und
   $R_3Si\text{-}NH\text{-}SiR_3$ in einem Molverhältnis von 1:1 bis 1,5:1 oder/und bei einer Reaktionstemperatur von 40 °C bis 80 °C umsetzt.

10. Verfahren nach Anspruch 9,
   **dadurch gekennzeichnet,**
   **dass** Hal Cl bedeutet.

11. Verfahren nach Anspruch 9 oder 10,
   **dadurch gekennzeichnet,**
   **dass** R bei jedem Auftreten einen Kohlenwasserstoffrest mit 1 bis 3 C-Atomen, eine $C_1$ - $C_{20}$-Alkylgruppe, eine Phenylgruppe oder eine Vinylgruppe darstellt.

12. Borosilazan-Verbindung der allgemeinen Formel (IV)

$$(R'R''N)_q R_x Hal_{3-x-q} Si\text{-}NH\text{-}BR_y Hal_{2-y-z}(NR'R'')_z,$$

   worin R' und R'' jeweils unabhängig Wasserstoff oder einen Kohlenwasserstoffrest mit 1 bis 20 C-Atomen darstellen,
   R jeweils unabhängig einen Kohlenwasserstoffrest mit 1 bis 20 C-Atomen darstellt,
   Hal jeweils unabhängig Cl, Br oder I bedeutet,
   q = 0,1 oder 2 ist,
   x = 1 oder 2 ist,
   y = 0 oder 1 ist und
   z = 0,1 oder 2 ist,
   mit der Maßgabe, dass
   $q + z \geq 1$, $x + q \leq 3$ und $y + z \leq 2$ ist.

13. Borosilazanverbindung nach Anspruch 12,
   **dadurch gekennzeichnet,**
   **dass** Hal bei jedem Auftreten Cl bedeutet.

14. Borosilazanverbindung nach Anspruch 12 oder 13,
   **dadurch gekennzeichnet,**
   **dass** R bei jedem Auftreten einen Kohlenwasserstoffrest mit 1 bis 3 C-Atomen, eine $C_1$-$C_{20}$-Alkylgruppe, eine Phenylgruppe oder eine Vinylgruppe darstellt.

15. Borosilazanverbindung nach einem der Ansprüche 12 bis 14,
   **dadurch gekennzeichnet,**
   **dass** R', R'' jeweils unabhängig ausgewählt werden aus $C_1$ - $C_3$-Alkyl, $C_1$ - $C_3$-Alkenyl, insbesondere Vinyl, und Phenyl.

16. Verfahren zur Herstellung einer Borosilazanverbindung nach einem der Ansprüche 12 bis 15,
   **dadurch gekennzeichnet,**
   **dass** man eine Verbindung der Formel (I), die wie in einem der Ansprüche 1 bis 3 definiert ist, mit mindestens der 4- bis 8-fachen molaren Menge einer Verbindung der Formel (V) R'R''NH bei einer Temperatur von -80 °C bis + 300 °C umsetzt wobei R' und R'' die in Anspruch 12 oder 15 angegebenen Bedeutungen aufweisen.

17. Verfahren zur Herstellung einer Oligo- oder Polyborosilazanverbindung,
   **dadurch gekennzeichnet,**
   **dass** man eine oder mehrere Verbindungen der Formel (I), wie in einem der Ansprüche 1 bis 3 definiert, oder/und eine oder mehrere Verbindungen der Formel (IV), wie in einem der Ansprüche 12 bis 15 definiert, polymerisiert oder mit einer oder mehreren Verbindungen der Formel (V) R'R''NH umsetzt, wobei R' und R'' die in Anspruch 12 oder 15 angegebenen Bedeutungen aufweisen.

18. Verfahren nach Anspruch 17,
   **dadurch gekennzeichnet,**
   **dass** man die Polymerisation als Polykondensation bei einer Temperatur von $\leq 200$ °C durchführt.

**19.** Verfahren nach Anspruch 17 oder 18,
**dadurch gekennzeichnet,**
**dass** man die Polymerisation bei einem vermindertem Druck von $\leq$ 90 kPa durchführt.

**20.** Oligo- oder Polyborosilazanverbindung, erhältlich durch ein Verfahren nach einem der Ansprüche 17 bis 19.

**21.** Oligo- oder Polyborosilazanverbindung Anspruch 20,
**dadurch gekennzeichnet,**
**dass** sie das Strukturmerkmal C-Si-N-B, Si-N-B-C oder/und C-Si-N-B-C aufweist.

**22.** Polyborosilazanverbindung nach Anspruch 20 oder 21,
**dadurch gekennzeichnet,**
**dass** die Polyborsilazanverbindung bei einer Temperatur zwischen 50 und 300 °C, bevorzugt 100 bis 150 °C, aufschmilzt und dass die Schmelze innerhalb dieses Temperaturintervalls eine Viskosität von 40 bis 200 Pa·s, bevorzugt 90 bis 120 Pa·s, und einen Verlustfaktor von 10 bis 500, bevorzugt 50 bis 100, erreicht.

**23.** Verfahren zur Herstellung einer Siliciumcarbobornitridkeramik,
**dadurch gekennzeichnet,**
**dass** man eine Borsilazanverbindung der Formel (IV) gemäß einem der Ansprüche 12 bis 15 oder eine Oligo- oder Polyborosilazanverbindung gemäß einem der Ansprüch 20 bis 22 in einer inerten oder einer Aminoder/und $NH_3$-haltigen Atmosphäre bei Temperaturen zwischen 800 °C und 1700 °C tempert.

**24.** Siliciumcarbobornitridkeramik, erhältlich durch ein Verfahren nach Anspruch 23,
**dadurch gekennzeichnet,**
**dass** in der Keramik C-Si-N-B, Si-N-B-C oder/und C-Si-N-B-C Struktureinheiten vorliegen und die Elemente Si, N, B und C zu mehr als 93 Massen-% enthalten sind.

**25.** Siliciumcarbobornitridkeramik nach Anspruch 24,
**dadurch gekennzeichnet,**
**dass** in der Keramik C-Si-N-B-Struktureinheiten vorliegen und die Elemente Si,N,B und C zu mehr als 93 Massen-%, insbesondere zu mehr als 97 Massen-%, enthalten sind, mit der Maßgabe, dass C $\geq$ 3 Massen-%.

**26.** Siliciumcarbobornitridkeramik nach einem der Ansprüche 24 oder 25,
**dadurch gekennzeichnet,**
**dass** es sich um ein amorphes Siliciumcarbobornitridkeramikpulver handelt.

**27.** Verfahren zur Herstellung einer Kompositkeramik aus $SiC, Si_3N_4$ und BN,
**dadurch gekennzeichnet,**
**dass** man eine Siliciumcarbobornitridkeramik nach einem der Ansprüche 24 bis 26 bei Temperaturen > 1700 °C auslagert.

**28.** Verfahren nach Anspruch 27,
**dadurch gekennzeichnet,**
**dass** eine zumindest teilweise kristalline Kompositkeramik hergestellt wird.

**29.** Kompositkeramik, erhältlich nach einem Verfahren gemäß Anspruch 27 oder 28 durch Kristallisation einer Siliciumcarbobornitridkeramik nach einem der Ansprüche 24 bis 26,
**dadurch gekennzeichnet,**
**dass** $SiC, Si_3N_4$ und BN in molekulardiperser Verteilung vorliegen.

**30.** Verwendung einer Borsilazanverbindung nach einem der Ansprüche 12 bis 15 oder einer Oligo- oder Polyborosilazanverbindung nach einem der Ansprüche 20 bis 22 oder von keramischen Materialien nach einem der Ansprüche 24, 25 oder 29 zur Herstellung von keramischen Fasern, keramischen Beschichtungen, keramischen Formkörpern, keramischen Folien oder/und keramischen Mikrostrukturen.

**31.** Keramische Fasern, erhältlich nach Anspruch 30,
**dadurch gekennzeichnet,**
**dass** man eine Polyborosilazanverbindung gemäß einem der Ansprüche 20 bis 22 im Ein- oder Multifilamentbetrieb unter inerter Atmosphäre schmelzspinnt, die ersponnenen Grünfasern in situ im Spinnschacht oder/und in einem nachfolgenden Verfahrensschritt durch Behandeln mit einem Reaktivgas, ausgewählt aus $NH_3$, Ethylendiamin, Trichlorsilan, Dichlorsilan, Boran-Dimethylsulfid-Addukt, Boran-Triethylamin-Addukt, $B_2H_6$ oder mit elektromagnetischer Strahlung oder Teilchenstrahlung unschmelzbar macht und die gehärteten Grünfasern bei Temperaturen zwischen 800 und 1600 °C, bevorzugt bei 1200 °C, keramisiert.

32. Keramische Fasern nach Anspruch 31,
    **dadurch gekennzeichnet,**
    **dass** die Schmelztemperatur der Spinnmasse 50 bis 300 °C, bevorzugt 100 bis 150 °C, beträgt, dass der Kapillardurchmesser der Spinndüsen 50 bis 500 μm, bevorzugt 300 μm, bei einer Kapillarlänge von 1 bis 30 mm, bevorzugt 5 bis 10 mm, beträgt und dass die Abzugsgeschwindigkeit 150 bis 1000 m/min, bevorzugt 300 bis 600 m/min beträgt.

33. Keramische Fasern nach einem der Ansprüche 31 oder 32,
    **dadurch gekennzeichnet,**
    **dass** die Fasern eine Zugfestigkeit von 0,5 bis 2 GPa, bevorzugt 1,5 GPa, einen Elastizitätsmodul von 50 bis 200 GPa, bevorzugt 150 GPa, sowie einen Sauerstoffgehalt von ≤ 3 Gew.-%, bevorzugt ≤ 1 Gew.-% aufweisen.

34. Verwendung nach Anspruch 30,
    **dadurch gekennzeichnet,**
    **dass** Mikrostrukturen durch Spritzguss oder lithografische Verfahren erzeugt werden.

35. Verwendung nach Anspruch 30,
    **dadurch gekennzeichnet,**
    **dass** aus den keramischen Fasern Gewebe oder Geflechte angefertigt werden.

36. Verwendung einer Borsilazanverbindung nach einem der Ansprüche 12 bis 15 in einer chemischen Gasphasenabscheidung (CVD) oder einer physikalischen Gasphasenabscheidung (PVD).

**Claims**

1. Compound of the formula (I)

$$R_xHal_{3-x}Si\text{-}NH\text{-}BR_yHal_{2-y},$$

   where R are each, independently of one another, a hydrocarbon radical having from 1 to 20 carbon atoms,
   Hal are each, independently of one another, Cl, Br or I,
   x = 1 or 2 and
   y = 0 or 1.

2. Compound according to Claim 1, **characterized in that** Hal is Cl on each occurrence.

3. Compound according to Claim 1 or 2, **characterized in that** R is, independently on each occurrence, a hydrocarbon radical having from 1 to 3 carbon atoms, a $C_1$-$C_{20}$-alkyl group, a phenyl group or a vinyl group.

4. Process for preparing a compound according to any of Claims 1 to 3, **characterized in that** a compound of the formula (II)

$$R_xHal_{3-x}Si\text{-}NH\text{-}SiR_3,$$

   where R are each, independently of one another, a hydrocarbon radical having from 1 to 20 carbon atoms,
   Hal are each, independently of one another, Cl, Br or I and
   x = 1 or 2,
   is reacted with a compound of the formula (III)

$$BR_yHal_{3-y},$$

where R and Hal are as defined above and
y = 0 or 1,
at a temperature in the range from -100°C to +25°C or/and in a molar ratio from 1:1 to 1:10.

5. Process according to Claim 4 or 5, **characterized in that** Hal is Cl on each occurrence.

6. Process according to any of Claim 4 or 5, **characterized in that** R is, independently on each occurrence, a hydrocarbon radical having from 1 to 3 carbon atoms, a $C_1$-$C_{20}$-alkyl group, a phenyl group or a vinyl group.

7. Process for preparing a compound of the formula (II)

$$R_xHal_{3-x}Si\text{-}NH\text{-}SiR_3,$$

where R are each, independently of one another, a hydrocarbon radical having from 1 to 20 carbon atoms and Hal is Cl, Br or I
and x = 1 or 2,
**characterized in that** $R_xSiHal_{4-x}$ and $R_3Si\text{-}NH\text{-}SiR_3$ are reacted.

8. Process according to Claim 7, **characterized in that** X = 2.

9. Process according to Claim 8, **characterized in that** $R_2SiHal_2$ and $R_3Si\text{-}NH\text{-}SiR_3$ are reacted in a molar ratio of from 1:1 to 1.5:1 or/and at a reaction temperature of from 40°C to 80°C.

10. Process according to Claim 9, **characterized in that** Hal is Cl.

11. Process according to Claim 9 or 10, **characterized in that** R is, on each occurrence, a hydrocarbon radical having from 1 to 3 carbon atoms, a $C_1$-$C_{12}$-alkyl group, a phenyl group or a vinyl group.

12. Borosilazane compound of the formula (IV)

$$(R'R''N)_qR_xHal_{3-x-q}Si\text{-}NH\text{-}BR_yHal_{2-y-z}(NR'R'')_z,$$

where R' and R" are each, independently of one another, hydrogen or a hydrocarbon radical having from 1 to 20 carbon atoms,
R are each, independently of one another, a hydrocarbon radical having from 1 to 20 carbon atoms,
Hal are each, independently of one another, Cl, Br or I,
q = 0, 1 or 2,
x = 1 or 2,
y = 0 or 1 and
z = 0, 1 or 2,
with the proviso that
$q + z \geq 1$, $x + q \leq 3$ and $y + z \leq 2$.

13. Borosilazane compound according to Claim 12, **characterized in that** Hal is Cl on each occurrence.

14. Borosilazane compound according to Claim 12 or 13, **characterized in that** R is, on each occurrence, a hydrocarbon radical having from 1 to 3 carbon atoms, a $C_1$-$C_{20}$-alkyl group, a phenyl group or a vinyl group.

15. Borosilazane compound according to any of Claims 12 to 14, **characterized in that** R', R" are each selected independently from among $C_1$-$C_3$-alkyl, $C_1$-$C_3$-alkenyl, in particular vinyl, and phenyl.

16. Process for preparing a borosilazane compound according to any of Claims 12 to 15, **characterized in that** a compound of the formula (I) as defined in any of claims 1 to 3 is reacted with at least 4 to 8 times the molar amount of a compound of the formula (V) R'R"NH at a temperature of from -80°C to +300°C, where R' and R" are as defined in claim 12 or 15.

17. Process for preparing an oligoborosilazane or polyborosilazane compound, **characterized in that** one or more compounds of the formula (I) as defined in any of claims 1 to 3 or/and one or more compounds of the formula (IV) as defined in any of claims 12 to 15 are polymerized or reacted with one or more compounds of the formula (V) R'R"NH, where R' and R" are as defined in claim 12 or 15.

18. Process according to Claim 17, **characterized in that** the polymerization is carried out as a polycondensation at a temperature of $\leq 200$°C.

19. Process according to Claim 17 or 18, **characterized in that** the polymerization is carried out under a reduced pressure of $\leq 90$ kPa.

20. Oligoborosilazane or polyborosilazane compound obtainable by a process according to any of Claims 17 to 19.

21. Oligoborosilazane or polyborosilazane compound according to Claim 20, **characterized in that** it has the structural feature C-Si-N-B, Si-N-B-C and/or C-Si-N-B-C.

22. Polyborosilazane compound according to Claim 20 or 21, **characterized in that** the polyborosilazane compound is melted at a temperature in the range from 50 to 300°C, preferably from 100 to 150°C, and the melt reaches a viscosity of from 40 to 200 Pa·s, preferably from 90 to 120 Pa·s, and a loss factor of from 10 to 500, preferably from 50 to 100, within this temperature range.

23. Process for producing a silicon carboboronitride ceramic, **characterized in that** a borosilazane compound of the formula (IV) according to any of Claims 12 to 15 or an oligoborosilazane or polyborosilazane compound according to any of Claims 20 to 22 is tempered at temperatures in the range from 800°C to 1700°C in an inert atmosphere or an amine- or/and $NH_3$-containing atmosphere.

24. Silicon carboboronitride ceramic obtainable by a process according to Claim 23, **characterized in that** C-Si-N-B, Si-N-B-C or/and C-Si-N-B-C structural units are present in the ceramic and the elements Si,N,B and C are present in an amount of more than 93% by mass.

25. Silicon carboboronitride ceramic according to Claim 24, **characterized in that** Si-N-B structural units are present in the ceramic and the elements Si,N,B and C are present in an amount of more than 93% by mass, in particular more than 97% by mass, with the proviso that C $\geq$ 3% by mass.

26. Silicon carboboronitride ceramic according to Claim 24 or 25, **characterized in that** it is an amorphous silicon carboboronitride ceramic powder.

27. Process for producing a composite ceramic comprising $SiC$,$Si_3N_4$ and BN, **characterized in that** a silicon carboboronitride ceramic according to any of Claims 24 to 26 is aged at temperatures of > 1700°C.

28. Process according to Claim 27, **characterized in that** an at least partly crystalline composite ceramic is produced.

29. Composite ceramic obtainable by a process according to Claim 27 or 28 by crystallization of a silicon carboboronitride ceramic according to any of Claims 24 to 26, **characterized in that** $SiC$,$Si_3N_4$ and BN are present in molecularly dispersed form.

30. Use of a borosilazane compound according to any of Claims 12 to 15 or an oligoborosilazane or polyborosilazane compound according to any of Claims 20 to 22 or of ceramic materials according to any of Claims 24, 25 or 29 for producing ceramic fibres, ceramic coatings, shaped ceramic bodies, ceramic sheets or/and ceramic microstructures.

31. Ceramic fibres obtainable according to Claim 30, **characterized in that** a polyborosilazane compound according to Claims 20 to 22 is melt-spun in the monofilament or multifilament mode under an inert atmosphere, the spun green fibre is made infusible in situ in the spinning shaft and/or in a subsequent process step by treatment with a reactive gas selected from among $NH_3$, ethylenediamine, trichlorosilane, dichlorosilane, borane-dimethyl sulphide adduct, borane-triethylamine adduct, $B_2H_6$ or by means of electromagnetic radiation or particle radiation and the cured green fibre is ceramicized at temperatures in the range from 800 to 1600°C, preferably 1200°C.

32. Ceramic fibres according to Claim 31, **characterized in that** the melt temperature of the spinning composition is from 50 to 300°C, preferably from 100 to 150°C, the capillary diameter of the spinneret is from 50 to 500 $\mu$m, preferably 300 $\mu$m, at a capillary length of from 1 to 30 mm, preferably from 5 to 10 mm, and the take-off velocity is from 150 to 1000 m/min, preferably from 300 to 600 m/min.

33. Ceramic fibres according to Claim 31 or 32, **characterized in that** the fibres have a tensile strength of from 0.5 to 2 GPa, preferably 1.5 GPa, a modulus of elasticity of from 50 to 200 GPa, preferably 150 GPa, and an oxygen content of $\leq$ 3% by weight, preferably $\leq$ 1% by weight.

34. Use according to Claim 30, **characterized in that** microstructures are produced by injection moulding or lithographic processes.

35. Use according to Claim 30, **characterized in that** woven or braided fabrics are manufactured from the ceramic fibres.

36. Use of a borosilazane compound according to any of Claims 12 to 15 in chemical vapour deposition (CVD) or physical vapour deposition (PVD).

**Revendications**

1. Composé de formule générale (I)

$$R_xHal_{3-x}Si\text{-}NH\text{-}BR_yHal_{2-y},$$

où R, à chaque fois indépendamment, représente un groupe hydrocarbure ayant de 1 à 20 atomes de C,
Hal, à chaque fois indépendamment, représente Cl, Br ou I,
x = 1 ou 2 et
y = 0 ou 1.

2. Composé selon la revendication 1, **caractérisé en ce que** Hal représente à chaque occurrence Cl.

3. Composé selon la revendication 1 ou 2, **caractérisé en ce que** R représente, à chaque occurrence indépendamment, un groupe hydrocarbure ayant de 1 à 3 atomes de C, un groupe alkyle en $C_1$ à $C_{20}$, un groupe phényle ou un groupe vinyle.

4. Procédé de préparation d'un composé selon une des revendications 1 à 3, **caractérisé en ce que** l'on fait réagir un composé de formule (II)

$$R_xHal_{3-x}Si\text{-}NH\text{-}SiR_3,$$

où R, à chaque fois indépendamment, représente un groupe hydrocarbure ayant de 1 à 20 atomes de C,
Hal, à chaque fois indépendamment, représente Cl, Br ou I,
x = 1 ou 2,
avec un composé de formule (III)

$$BR_yHal_{3-y},$$

où R et Hal ont les significations susmentionnées et
y = 0 ou 1,
à une température située entre -100°C et +25°C et/ou en un rapport molaire de 1/1 à 1/10.

**5.** Procédé selon la revendication 4, **caractérisé en ce que** Hal signifie à chaque occurrence Cl.

**6.** Procédé selon la revendication 4 ou 5, **caractérisé en ce que** R représente, à chaque occurrence indépendamment, un groupe hydrocarbure ayant de 1 à 3 atomes de C, un groupe alkyle en $C_1$ à $C_{20}$, un groupe phényle ou un groupe vinyle.

**7.** Procédé de préparation d'un composé de formule (II)

$$R_x Hal_{3-x} Si-NH-SiR_3,$$

où R, à chaque fois indépendamment, représente un groupe hydrocarbure ayant de 1 à 20 atomes de C, et Hal représente Cl, Br ou I,
x = 1 ou 2,
**caractérisé en ce que** l'on fait réagir $R_x SiHal_{4-x}$ et $R_3 Si-NH-SiR_3$.

**8.** Procédé selon la revendication 7, **caractérisé en ce que** x = 2.

**9.** Procédé selon la revendication 8, **caractérisé en ce que** l'on fait réagir $R_2 SiHal_2$ et $R_3 Si-NH-SiR_3$ en un rapport molaire de 1/1 à 1,5/1 et/ou à une température de réaction de 40°C à 80°C.

**10.** Procédé selon la revendication 9, **caractérisé en ce que** Hal représente CL

**11.** Procédé selon la revendication 9 ou 10, **caractérisé en ce que** R représente, à chaque occurrence, un groupe hydrocarbure ayant de 1 à 3 atomes de C, un groupe alkyle en $C_1$ à $C_{20}$, un groupe phényle ou un groupe vinyle.

**12.** Composé de borosilazane de formule générale (IV)

$$(R'R''N)_q R_x Hal_{3-x-q} Si-NH-BR_y Hal_{2-y-z}(NR'R'')_z,$$

où R' et R'' représentent, à chaque fois indépendamment, l'hydrogène ou un groupe hydrocarbure ayant de 1 à 20 atomes de C,
R représente, à chaque fois indépendamment, un groupe hydrocarbure ayant de 1 à 20 atomes de C,
Hal représente, à chaque fois indépendamment, Cl, Br ou I,
q = 0, 1 ou 2,
x = 1 ou 2,
y = 0 ou 1 et
z = 0, 1 ou 2,
à la condition que
$q+z \geq 1$, $x+q \leq 3$ et $y+z \leq 2$.

**13.** Composé de borosilazane selon la revendication 12, **caractérisé en ce que** Hal signifie, à chaque occurrence, Cl.

**14.** Composé de borosilazane selon la revendication 12 ou 13, **caractérisé en ce que** R représente, à chaque occurrence, un groupe hydrocarbure ayant de 1 à 3 atomes de C, un groupe alkyle en $C_1$ à $C_{20}$, un groupe phényle ou un groupe vinyle.

**15.** Composé de borosilazane selon une des revendications 12 à 14, **caractérisé en ce que** R', R'' sont choisis, à chaque fois indépendamment, parmi alkyle en $C_1$ à $C_3$, alcényle en $C_1$ à $C_3$, en particulier vinyle et phényle.

**16.** Procédé de préparation d'un composé de borosilazane selon une des revendications 12 à 15, **caractérisé en ce que** l'on fait réagir un composé de formule (I), tel que défini dans l'une des revendications 1 à 3, avec au moins 4 à 8 fois la quantité molaire d'un composé de formule (V) R'R''NH à une température de -80°C à +300°C, où R' et R'' présentent les significations indiquées dans la revendication 12 ou 15.

**17.** Procédé de préparation d'un composé d'oligo- ou de polyborosilazane, **caractérisé en ce que** l'on polymérise un ou plusieurs composés de formule (I), tels que définis dans l'une des revendications 1 à 3, et/ou un ou plusieurs composés de formule (IV), tels que définis dans l'une des revendications 12 à 15, ou que l'on fait réagir avec un ou plusieurs composés de formule (V) R'R"NH, où R' et R" présentent les significations indiquées dans la revendication 12 ou 15.

18. Procédé selon la revendication 17, **caractérisé en ce que** l'on réalise la polymérisation sous forme de polycondensation à une température ≤ 200°C.

19. Procédé selon la revendication 17 ou 18, **caractérisé en ce que** l'on réalise la polymérisation sous pression réduite ≤ 90 kPa.

20. Composé d'oligo- ou de polyborosilazane, pouvant être obtenu par un procédé selon une des revendications 17 à 19.

21. Composé d'oligo- ou de polyborosilazane selon la revendication 20, **caractérisé en ce qu'**il présente la caractéristique de structure C-Si-N-B, Si-N-B-C et/ou C-Si-N-B-C.

22. Composé de polyborosilazane selon la revendication 20 ou 21, **caractérisé en ce que** le composé de polyborosilazane fond à une température située entre 50 et 300°C, de préférence 100 à 150°C, et que la matière fondue atteint, dans cet intervalle de températures, une viscosité de 40 à 200 Pa.s, de préférence 90 à 120 Pa.s, et un facteur de perte de 10 à 500, de préférence 50 à 100.

23. Procédé de préparation d'une céramique de siliciumcarboboronitrure, **caractérisé en ce que** l'on recuit un composé de borosilazane de formule (IV) selon une des revendications 12 à 15 ou un composé d'oligo- ou de polyborosilazane selon une des revendications 20 à 22, dans une atmosphère inerte ou une atmosphère aminée et/ou contenant du $NH_3$ à des températures situées entre 800°C et 1700°C.

24. Céramique de siliciumcarboboronitrure, pouvant être obtenue par un procédé selon la revendication 23, **caractérisée en ce que** des unités structurelles C-Si-N-B, Si-N-B-C et/ou C-Si-N-B-C sont présentes dans la céramique et les éléments Si, N, B et C sont présents à plus de 93 % en poids.

25. Céramique de siliciumcarboboronitrure selon la revendication 24, **caractérisée en ce que** des unités structurelles C-Si-N-B sont présentes dans la céramique et les éléments Si, N, B et C sont présents à plus de 93 % en poids, en particulier à plus de 97 % en poids, à la condition que C ≥ 3 % en poids.

26. Céramique de siliciumcarboboronitrure selon une des revendications 24 ou 25, **caractérisée en ce que** c'est une poudre de céramique de carbonitrure de silicium - bore amorphe.

27. Procédé de fabrication d'une céramique composite en SiC, $Si_3N_4$ et BN, **caractérisé en ce que** l'on soumet une céramique de siliciumcarboboronitrure selon l'une des revendications 24 à 26 à des températures > 1700°C.

28. Procédé selon la revendication 27, **caractérisé en ce que** l'on prépare une céramique composite au moins partiellement cristalline.

29. Céramique composite, pouvant être obtenue selon la revendication 27 ou 28 par cristallisation d'une céramique de siliciumcarboboronitrure selon une des revendications 24 à 26, **caractérisée en ce que** SiC, $Si_3N_4$ et BN se présentent sous une répartition moléculaire dispersée.

30. Utilisation d'un composé de borosilazane selon une des revendications 12 à 15 ou d'un composé d'oligo- ou de polyborosilazane selon une des revendications 20 à 22 ou de matériaux céramiques selon une des revendications 24, 25 ou 29 pour la fabrication de fibres céramiques, revêtements céramiques, corps moulés céramiques, feuilles céramiques et/ou microstructures céramiques.

31. Fibres céramiques, pouvant être obtenues selon la revendication 30, **caractérisées en ce que** l'on file par fusion un composé de polyborosilazane selon une des revendications 20 à 22 en mode de fonctionnement mono- ou multifilament sous atmosphère inerte, **en ce que** l'on rend infusibles les fibres brutes filées in situ dans le bac de filage et/ou dans une autre étape de procédé consécutive, par traitement avec un gaz réactif, choisi parmi $NH_3$, éthylènediamine, trichlorosilane, dichloro-silane, produit d'addition du borane et du diméthyl-sulfure, produit d'addition du borane et de la triéthylamine, $B_2H_6$ ou avec des rayons électromagnétiques ou des rayons de particules, et que l'on transforme en céramique les fibres brutes durcies à des températures situées entre 800 et 1600°C, de préférence à 1200°C.

32. Fibres céramiques selon la revendication 31, **caractérisées en ce que** la température de fusion de la masse filée est de 50 à 300°C, de préférence 100 à 150°C, que le diamètre du capillaire des filières est de 50 à 500 μm, de préférence de 300 μm, pour une longueur de capillaire de 1 à 30 mm, de préférence 5 à 10 mm, et que la vitesse de tirage est de 150 à 1000 m/min, de préférence de 300 à 600 m/min.

33. Fibres céramiques selon une des revendications 31 ou 32, **caractérisées en ce que** les fibres présentent une résistance à la traction de 0,5 à 2 GPa, de préférence de 1,5 GPa, un module d'élasticité de 50 à 200 GPa, de préférence de 150 GPa, ainsi qu'une teneur en oxygène $\leq$ 3 % en poids, de préférence $\leq$ 1 % en poids.

34. Utilisation selon la revendication 30, **caractérisée en ce que** les microstructures sont produites par moulage par injection ou par des procédés lithographiques.

35. Utilisation selon la revendication 30, **caractérisée en ce que** l'on confectionne des tissus ou des tresses à partir des fibres céramiques.

36. Utilisation d'un composé de borosilazane selon une des revendications 12 à 15 dans un procédé de dépôt chimique en phase gazeuse (CVD) ou dans un procédé de dépôt physique en phase gazcuse (PVD).